# EUROPEAN PATENT APPLICATION

(11) **EP 4 772 963 A1**
(43) Date of publication of application: **08.07.2026**
(21) Application number: 25216702.8
(22) Date of filing: 18.11.2025
(51) Int. Cl.: G06F 1/16, C09J 7/20, H04M 1/02

(54) **RELEASE FILM AND METHOD OF MANUFACTURING AN ELECTRONIC DEVICE USING THE RELEASE FILM**

(30) Priority: 02.01.2025 KR 20250000272
(71) Applicant: Samsung Display Co., Ltd., Yongin-si, Gyeonggi-do 17113 (KR)
(72) Inventor: LEE, Kise, Yongin-si (KR); SOH, Yongkwon, Yongin-si (KR); KIM, Byungchan, Yongin-si (KR); NAM, Hosung, Yongin-si (KR); LEE, Jungeun, Yongin-si (KR); KIM, Yeonwoo, Yongin-si (KR); LEE, Junsu, Yongin-si (KR)
(74) Representative: Marks & Clerk LLP

(57) **Abstract**

A release film includes a first sub-release film including a first body portion attached to a display module and at least one first grip portion that protrudes from the first body portion and a second sub-release film disposed under the first sub-release film and including a second body portion attached to the first body portion and at least one second grip portion that protrudes from the second body portion. Here, the first grip portion overlaps with the second grip portion.

## Description

### BACKGROUND

### 1. Field

Embodiments of the present disclosure relate to a release film and a method of manufacturing an electronic device using the release film.

### 2. Description of the Related Art

An electronic device may be formed (or manufactured) by assembling various components including a display module. During the manufacturing of the electronic device, a process for transporting the display module, a process for storing the display module, or a process for inspecting the display module for defects may be performed. In this case, a cover member for protecting the display module may cover upper and/or lower portions of the display module. A release film may be attached between the display module and the cover member to secure the cover member to the upper and/or lower portions of the display module and then to allow subsequent removal.

### SUMMARY

An object of the present disclosure is to provide a release film.

Another object of the present disclosure is to provide a method of manufacturing an electronic device using the release film.

However, objects of the present disclosure are not limited to the above objects, and may be variously extended without departing from the scope of the present disclosure.

According to embodiments of the present disclosure, a release film includes a first sub-release film including a first body portion attached (e.g. configured to be attached) to a display module and at least one first grip portion that protrudes from the first body portion and a second sub-release film disposed under the first sub-release film and including a second body portion attached to the first body portion and at least one second grip portion that protrudes from the second body portion. In some aspects, the first grip portion overlaps with the second grip portion.

In some embodiments, the first grip portion may be attached to the second grip portion.

In some embodiments, the first sub-release film may be detachable (e.g., configured to be detachable) from the display module using the first grip portion.

In some embodiments, the second sub-release film may remain attached (e.g., is configured to remain attached) to the first sub-release film while the first sub-release film is detached from the display module.

In some embodiments, the first grip portion may not overlap (e.g., is configured such that it may not overlap) with the display module, and the second grip portion may not overlap (e.g., is configured such that it may not overlap) with the display module.

In some embodiments, the first grip portion may include a first-first grip portion, a first-second grip portion, a first-third grip portion, and a first-fourth grip portion. In some aspects, the second grip portion may include a second-first grip portion, a second-second grip portion, a second-third grip portion, and a second-fourth grip portion. Furthermore, the first-first grip portion, the first-second grip portion, the first-third grip portion, and the first-fourth grip portion may overlap with the second-first grip portion, the second-second grip portion, the second-third grip portion, and the second-fourth grip portion, respectively.

In some embodiments, an adhesive force between the first sub-release film and the second sub-release film may be greater (e.g., may be configured to be greater) than an adhesive force between the first sub-release film and the display module.

In some embodiments, an adhesive force between the first sub-release film and the second sub-release film may be greater than 200 gf/in. In some aspects, an adhesive force between the first sub-release film and the display module may be (e.g., configured to be) less than 200 gf/in.

In some embodiments, the first grip portion may be attached (e.g., configured to be attached) to an upper cover member.

In some embodiments, the release film may further include a third sub-release film disposed under the second sub-release film and including a third body portion attached to the second body portion, at least one third grip portion that protrudes from the third body portion, and a cut portion attached (e.g., configured to be attached) to a lower cover member.

In some embodiments, the third grip portion may overlap with the first grip portion and the second grip portion.

In some embodiments, the first sub-release film may further include a masking tape disposed on the first grip portion and having a release-treated surface.

In some embodiments, the masking tape may be attached (e.g., configured to be attached) to an upper cover member.

In some embodiments, the second sub-release film may be attached (e.g., configured to be attached) to a lower cover member. In some aspects, an adhesive force between the second sub-release film and the lower cover member may be (e.g., configured to be) smaller than an adhesive force between the first sub-release film and the second sub-release film.

In some embodiments, the second sub-release film may be attached (e.g., configured to be attached) to a lower cover member. In some aspects, a bottom surface of the second sub-release film may be release-treated.

According to embodiments of the present disclosure, a release film includes a first sub-release film including a first body portion attached (e.g., configured to be attached) to a display module and a second sub-release film disposed under the first sub-release film and including a second body portion attached to the first body portion, at least one grip portion that protrudes from the second body portion, and a folding portion that extends from the grip portion. In some aspects, the folding portion is folded such that the folding portion overlaps with the grip portion.

In some embodiments, a bottom surface of the folding portion attached (e.g., configured to be attached) to an upper cover member may be release-treated. In some aspects, a bottom surface of the second body portion attached (e.g., configured to be attached) to a lower cover member may be release-treated together with the bottom surface of the folding portion.

In some embodiments, the folding portion may be folded such that the folding portion further overlaps the first sub-release film.

According to embodiments of the present disclosure, a method of manufacturing an electronic device includes preparing (or providing) a first sub-release film attached to a display module and a second sub-release film attached to the first sub-release film, detaching an upper cover member attached to a first grip portion of the first sub-release film from the first sub-release film, and detaching the first sub-release film from the display module while gripping the first grip portion and the second grip portion of the second sub-release film together. In some aspects, the first grip portion overlaps with the second grip portion, the first grip portion does not overlap with the display module, and the second grip portion does not overlap with the display module.

In some embodiments, the second sub-release film may be detached from the display module together with the first sub-release film while the first sub-release film is detached from the display module. In some aspects, the second sub-release film may remain attached to the first sub-release film while the first sub-release film is detached from the display module.

According to embodiments of the present disclosure, there is provided a display module comprising the release film of the aforementioned embodiments.

At least some of the above and other features of the invention are set out in the claims.

Therefore, a release film according to embodiments includes a first sub-release film and a second sub-release film that are laminated to each other. The first sub-release film may include a first grip portion, the second sub-release film may include a second grip portion, and the first grip portion and the second grip portion may overlap with each other. While the release film is detached, the first and second grip portions may be gripped together by a gripper (e.g., a user's hand). Accordingly, the release film may be smoothly detached from the display module (e.g., may be easily detached from the display module without causing any damage), and the yield of an electronic device may be improved.

However, effects of the present disclosure are not limited to the above effects, and may be variously extended without departing from the scope of the present disclosure.

### BRIEF DESCRIPTION OF THE DRAWINGS

Illustrative, non-limiting embodiments will be more clearly understood from the following detailed description in conjunction with the accompanying drawings.
FIG. 1 is a block diagram illustrating an electronic device according to embodiments.
FIG. 2 is a schematic diagram of the electronic device of FIG. 1.
FIG. 3 is a perspective view illustrating an electronic device according to embodiments.
FIG. 4 is a cross-sectional view for describing the electronic device of FIG. 3.
FIG. 5 is a block diagram illustrating a display panel included in the electronic device of FIG. 4.
FIG. 6 is a cross-sectional view for describing the display panel of FIG. 5.
FIG. 7 is a plan view illustrating a support member included in the electronic device of FIG. 4.
FIGS. 8 to 10 are rear views illustrating a release film according to embodiments.
FIGS. 11 to 20 are diagrams illustrating a method of manufacturing an electronic device using a release film according to embodiments.
FIG. 21 is a rear view illustrating a release film according to embodiments.
FIGS. 22 and 23 are diagrams illustrating a method of manufacturing an electronic device using a release film according to embodiments.
FIGS. 24 and 25 are rear views illustrating a release film according to embodiments.
FIGS. 26 to 31 are diagrams illustrating a method of manufacturing an electronic device using a release film according to embodiments.
FIGS. 32 and 33 are rear views illustrating a release film according to embodiments.
FIGS. 34 to 39 are diagrams illustrating a method of manufacturing an electronic device using a release film according to embodiments.
FIGS. 40 and 41 are rear views illustrating a release film according to embodiments.
FIGS. 42 to 46 are diagrams illustrating a method of manufacturing an electronic device using a release film according to embodiments.
FIGS. 47 and 48 are rear views illustrating a release film according to embodiments.
FIGS. 49 to 53 are diagrams illustrating a method of manufacturing an electronic device using a release film according to embodiments.

### DETAILED DESCRIPTION

Hereinafter, embodiments of the present disclosure will be explained in detail with reference to the accompanying drawings. Identical components in the drawings will be designated by the same reference numerals, and the duplicated descriptions of identical components will be omitted.

A display device according to embodiments may be applied to various electronic devices. An electronic device according to embodiments may include the display device described herein and may further include a module or a device having additional functions in addition to the display device.

Embodiments supported by the present disclosure will now be described more fully hereinafter with reference to the accompanying drawings, in which one or more example embodiments are illustrated. Aspects supported by the present disclosure may, however, be embodied in different forms and should not be construed as limited to the embodiments set forth herein. Rather, these example embodiments are provided so that this disclosure will be thorough and complete, and will fully convey the scope of example aspects of the invention to those skilled in the art.

Terms such as, for example, first, second, and the like may be used to describe various components, but the components should not be limited by the terms. The terms as used herein may distinguish one component from other components and are not to be limited by the terms. For example, without departing the scope of the present disclosure, a first component may be referred to as a second component, and similarly, the second component may also be referred to as the first component. The terms of a singular form may include plural forms unless otherwise specified.

The terminology used herein is for the purpose of describing particular embodiments and is not intended to be limiting. As used herein, "a," "an," "the," and "at least one" do not denote a limitation of quantity, and are intended to include both the singular and plural, unless the context clearly indicates otherwise. For example, "an element" has the same meaning as "at least one element," unless the context clearly indicates otherwise. "At least one" is not to be construed as limiting "a" or "an." "Or" means "and/or." As used herein, the term "and/or" includes any and all combinations of one or more of the associated listed items. It will be further understood that the terms "comprises" and/or "comprising," or "includes" and/or "including" when used in this specification, specify the presence of stated features, regions, integers, steps, operations, elements, and/or components, but do not preclude the presence or addition of one or more other features, regions, integers, steps, operations, elements, or components.

The terms "about" or "approximately" as used herein are inclusive of the stated value and include a suitable range of deviation for the particular value as determined by one of ordinary skill in the art, considering the measurement in question and the error associated with measurement of the particular quantity. The term "about" can mean within one or more standard deviations, or within ± 30%, 20%, 10%, 5% of the stated value, for example.

The term "substantially," as used herein, means approximately or actually. The term "substantially equal" means approximately or actually equal. The term "substantially the same" means approximately or actually the same. The term "substantially identical" means approximately or actually identical. The term "substantially perpendicular" means approximately or actually perpendicular.

Spatially relative terms, such as "beneath," "below," "lower," "above," "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" the other elements or features. Thus, the term "below" can encompass both an orientation of above and below. The device may be otherwise oriented (rotated 90 degrees or at other orientations) and the spatially relative descriptors used herein interpreted accordingly.

Embodiments are described herein with reference to cross section illustrations that are schematic illustrations of example embodiments. As such, variations from the shapes of the illustrations as a result, for example, of manufacturing techniques and/or tolerances, are to be expected. Thus, embodiments described herein should not be construed as limited to the particular shapes of regions as illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the figures are schematic in nature and their shapes are not intended to illustrate the precise shape of a region and are not intended to limit the scope of the present claims.

Unless otherwise defined, all terms (including technical and scientific terms) used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases.

It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

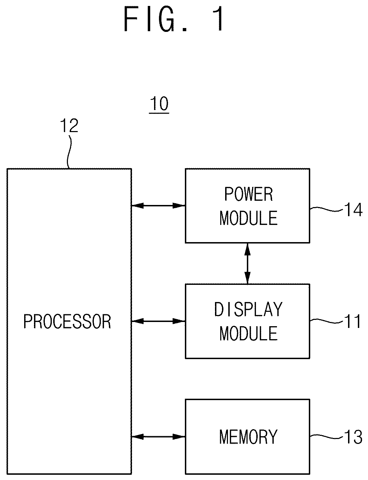

FIG. 1 is a block diagram illustrating an electronic device according to embodiments.

Referring to FIG. 1, the electronic device 10 may include a display module 11, a processor 12, a memory 13, and a power module 14.

The processor 12 may include at least one of a central processing unit (CPU), an application processor (AP), a graphic processing unit (GPU), a communication processor (CP), an image signal processor (ISP), and a controller.

The memory 13 may store data information for an operation of the processor 12 or the display module 11. When the processor 12 executes an application stored in the memory 13, an image data signal and/or an input control signal may be transferred to the display module 11, and the display module 11 may output image information through a display screen by processing the received signal.

The power module 14 may include a power supply module such as a power adapter, a battery device, and the like and a power conversion module that converts power supplied by the power supply module to generate power for an operation of the electronic device 10.

At least one of the components of the electronic device 10 described herein may be included in the display device described herein. In some aspects, some of the individual modules functionally included in one module may be included in the display device, and others may be provided separately from the display device. For example, the display device may include the display module 11, and the processor 12, the memory 13, and the power module 14 may be provided in the form of other devices within the electronic device 10 other than the display device.

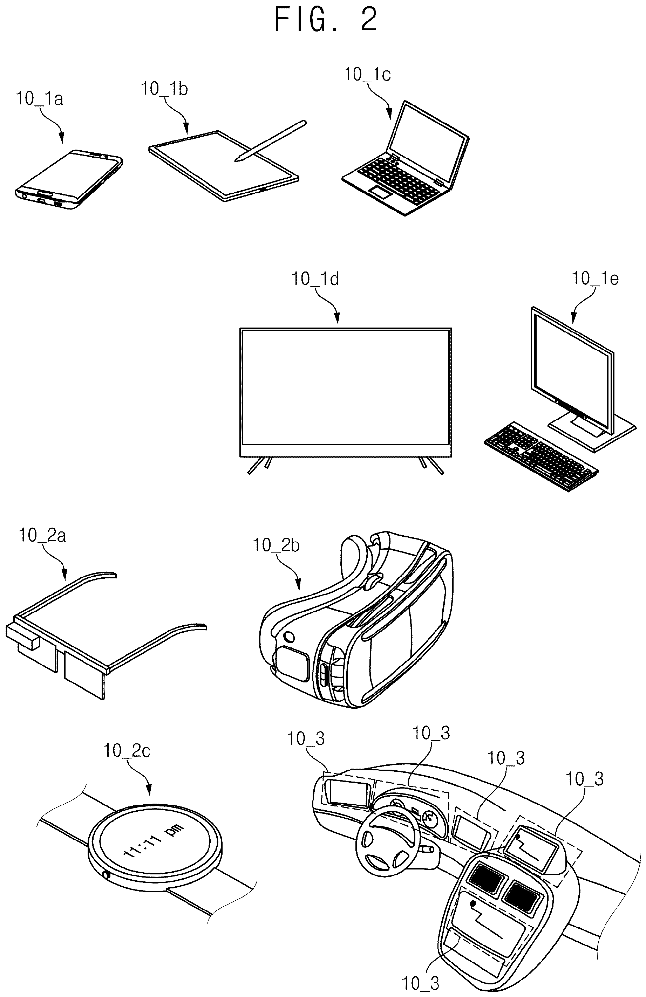

FIG. 2 is a schematic diagram of the electronic device of FIG. 1.

Referring to FIG. 2, various electronic devices to which the display device according to embodiments is applied may include image display electronic devices including display modules such as a smart phone 10_1a, a tablet personal computer (PC) 10_1b, a laptop 10_1c, a television (TV) 10_1d, and a desk monitor 10_1e, wearable electronic devices including display modules such as smart glasses 10_2a, a head mounted display (HMD) 10_2b, and a smart watch 10_2c, and vehicle electronic devices 10_3 including display modules such as a room mirror display and a center information display (CID) arranged on an instrument panel, a center fascia, and a dashboard of an automobile.

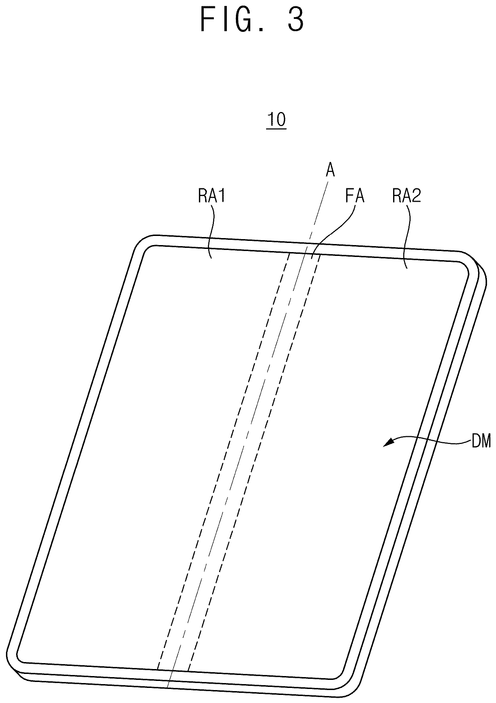

FIG. 3 is a perspective view illustrating an electronic device according to embodiments.

Referring to FIG. 3, the electronic device 10 may be divided into a first region RA1, a second region RA2, and a folding region FA. An image may be displayed in the first region RA1, the second region RA2, and the folding region FA.

The first region RA1 and the second region RA2 may be formed in a flat shape, and the folding region FA may be transformed into a flat surface or a curved surface. For example, the folding region FA may be folded with respect to a folding axis A as a rotation axis.

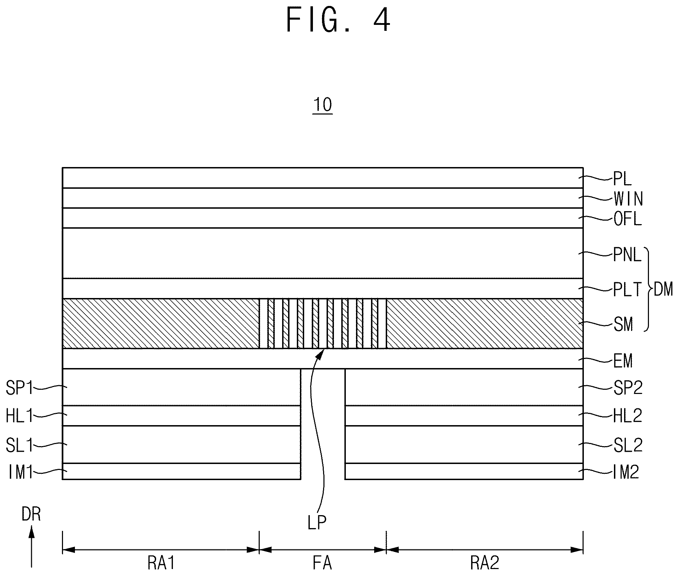

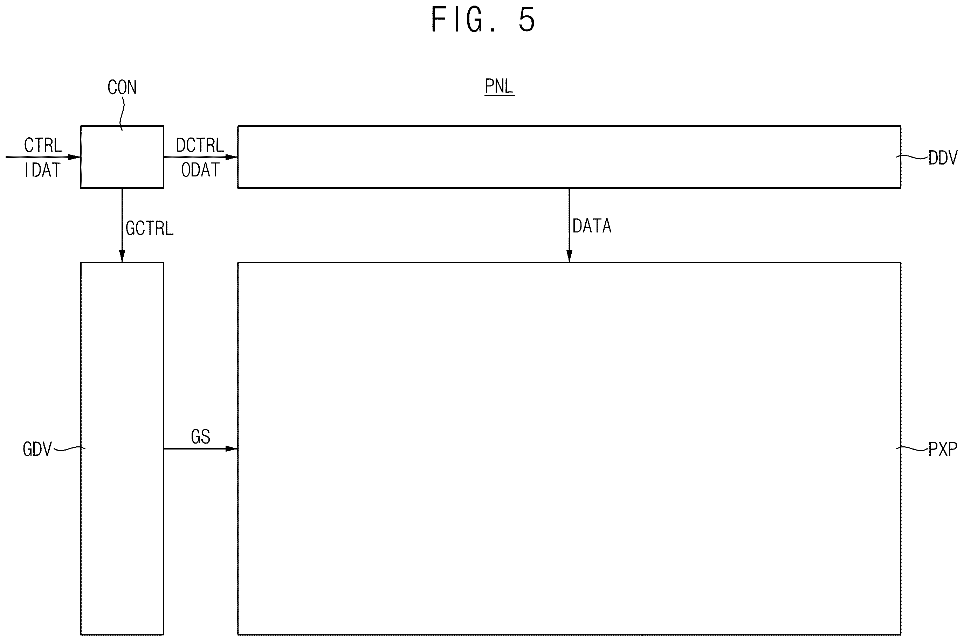

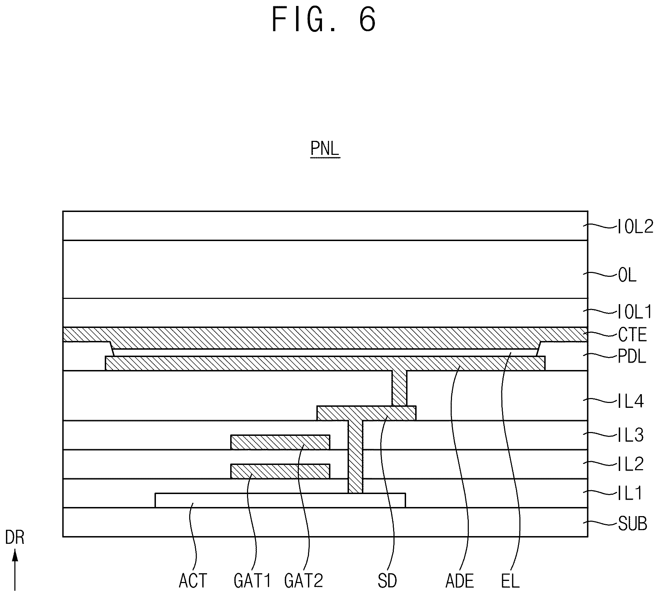

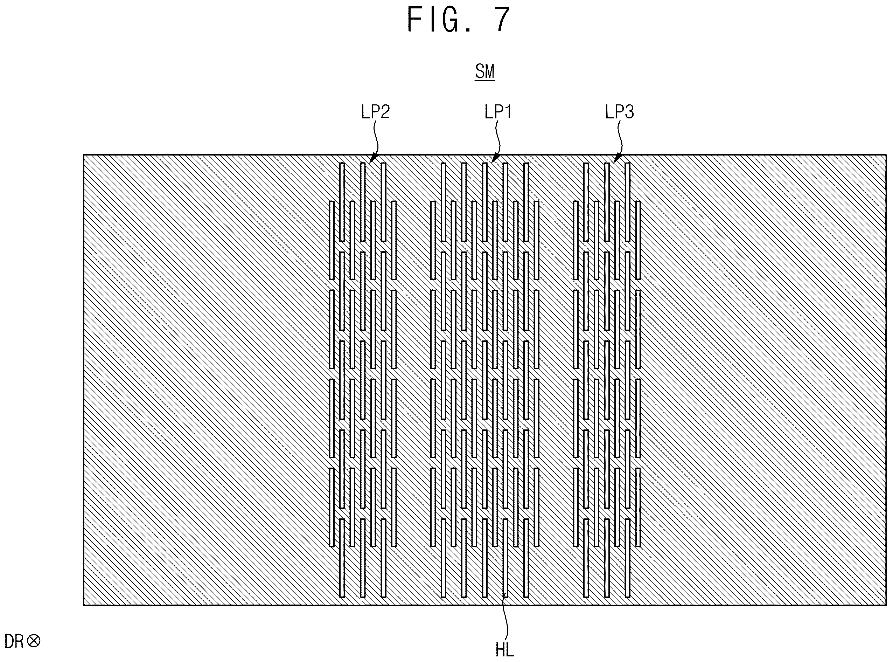

FIG. 4 is a cross-sectional view for describing the electronic device of FIG. 3, FIG. 5 is a block diagram illustrating a display panel included in the electronic device of FIG. 4, FIG. 6 is a cross-sectional view for describing the display panel of FIG. 5, and FIG. 7 is a plan view illustrating a support member included in the electronic device of FIG. 4.

Referring to FIG. 4, the electronic device 10 may include a display module DM, an elastic member EM, a first support plate SP1, a second support plate SP2, a first heat dissipation layer HL1, a second heat dissipation layer HL2, a first shock absorption layer SL1, a second shock absorption layer SL2, a first insulating member IM1, a second insulating member IM2, an optical function layer OFL, a window WIN, and a window protection layer PL. The electronic device 10 may have a structure that is stacked in a height direction DR.

In an embodiment, the display module DM may include a display panel PNL, a plate PLT, and a support member SM.

The display module DM may display an image. In an embodiment, the display module DM may overlap with the first region RA1, the second region RA2, and the folding region FA.

The plate PLT may be disposed under the display module DM. The plate PLT may support the display module DM. In an embodiment, the plate PLT may be a conductive plate (e.g., a copper (Cu) sheet or a stainless steel (SUS) sheet) and may further include at least one auxiliary material layer (e.g., a graphite member).

The support member SM may be disposed under the plate PLT. The support member SM may support the display module DM. In an embodiment, the support member SM may include a material having high rigidity (e.g., an alloy). For example, the support member SM may include stainless steel, a magnesium alloy, or the like. In another embodiment, the support member SM may include glass or plastic. For example, the support member SM may include carbon fiber reinforced plastic (CFRP), glass fiber reinforced plastic (GFRP), or the like.

In some aspects, a lattice portion LP overlapping with the folding region FA may be formed in the support member SM.

The elastic member EM may be disposed under the support member SM. The elastic member EM may overlap with the folding region FA, the first region RA1, and the second region RA2. The elastic member EM may cover the lattice portion LP.

In an embodiment, the elastic member EM may include an elastomer (or elastic polymer) having relatively high elasticity (or, restoring force). For example, the elastic member EM may include an elastic material such as silicone, urethane, thermoplastic polyurethane (TPU), or the like.

The first support plate SP1 may be disposed under the elastic member SM and may overlap with the first region RA1. The second support plate SP2 may be disposed under the elastic member SM and may overlap with the second region RA2.

In an embodiment, the first and second support plates SP1 and SP2 may include a material having high rigidity (e.g., an alloy). For example, the first and second support plates SP1 and SP2 may include stainless steel, a magnesium alloy, or the like. In another embodiment, the first and second support plates SP1 and SP2 may include glass or plastic. For example, the first and second support plates SP1 and SP2 may include carbon fiber reinforced plastic, glass fiber reinforced plastic, or the like.

The first heat dissipation layer HL1 may be disposed under the first support plate SP1 and may overlap with the first region RA1. The second heat dissipation layer HL2 may be disposed under the second support plate SP2 and may overlap with the second region RA2.

In an embodiment, the first and second heat dissipation layers HL1 and HL2 may include a material having high thermal conductivity. For example, the first and second heat dissipation layers HL1 and HL2 may include aluminium (Al), copper (Cu), or the like.

The first cushion layer SL1 may be disposed under the first heat dissipation layer HL1 and may overlap with the first region RA1. The second cushion layer SL2 may be disposed under the second heat dissipation layer HL2 and may overlap with the second region RA2.

In an embodiment, the first and second cushion layers SL1 and SL2 may include a material having flexibility. For example, the first and second cushion layers SL1 and SL2 may include a foam-type material such as polyurethane foam, polystyrene foam, or the like.

The first insulating member IM1 may be disposed under the first cushion layer SL1 and may overlap with the first region RA1. The second insulating member IM2 may be disposed under the second cushion layer SL2 and may overlap with the second region RA2.

In an embodiment, the first and second insulating members IM1 and IM2 may prevent rattle from occurring in the electronic device 10. For example, the first and second insulating members IM1 and IM2 may be formed in the form of a film or a tape.

The optical function layer OFL may be disposed on the display panel PNL. The optical function layer OFL may improve the display quality of the electronic device 10. In an embodiment, the optical function layer OFL may be a polarizing layer. In another embodiment, the optical function layer OFL may have a structure in which layers with different reflectivities are laminated. In still another embodiment, the optical function layer OFL may be implemented with a quantum dot and/or a color filter.

The window WIN may be disposed on the optical functional layer OFL. In an embodiment, the window WIN may include a polymer material, ultra-thin tempered glass (UTG), a glass film, or the like.

The window protection layer PL may be disposed on the window WIN. In an embodiment, the window protection layer PL may perform at least one of shock absorption, fingerprint prevention, and scratch prevention. For example, the window protection layer PL may include a transparent polymer film.

However, the electronic device 10 is not limited to the above-described configurations. That is, the electronic device 10 may further include other configurations or omit any one of the above-described configurations as applicable or desired. In some aspects, an adhesive layer may be further formed between the above-described configurations as applicable or desired.

Referring to FIG. 5, the display panel PNL may include a pixel unit (or referred to as a display region) PXP, a data driving unit (or referred to as a data driver, a data driving circuit, and the like) DDV, a gate driving unit (or referred to as a gate driver, a gate driving circuit, and the like) GDV, and a control unit (or referred to as a controller and the like) CON.

The pixel unit PXP may include pixels. The pixels may emit light having luminance corresponding to a data voltage DATA in response to a gate signal GS.

The data driving unit DDV may generate the data voltage DATA based on output image data ODAT and a data control signal DCTRL. For example, the data driving unit DDV may generate the data voltage DATA corresponding to the output image data ODAT and may output the data voltage DATA in response to the data control signal DCTRL. The output image data ODAT may be RGB data for an image displayed in the display region, and the data control signal DCTRL may include an output data enable signal, a horizontal start signal, and a load signal.

The gate driving unit GDV may generate the gate signal GS based on the gate control signal GCTRL.

The control unit CON (e.g., timing controller (T-CON)) may receive input image data IDAT and a control signal CTRL from an external host processor (e.g., GPU). For example, the input image data IDAT may be RGB data including red image data, green image data, and blue image data. The control unit CON may generate the data control signal DCTRL, the output image data ODAT, and the gate control signal GCTRL based on the input image data IDAT and the control signal CTRL.

Referring to FIG. 6, the display panel PNL may include a substrate SUB, an active pattern ACT, a first insulating layer IL1, a first gate electrode GAT1, a second insulating layer IL2, a second gate electrode GAT2, a third insulating layer IL3, a connection electrode SD, a fourth insulating layer IL4, a first electrode ADE, a pixel defining layer PDL, a light-emitting layer EL, a second electrode CTE, a first thin film inorganic layer IOL1, a thin film organic layer OL, and a second thin film inorganic layer IOL2.

In an embodiment, the substrate SUB may be formed of glass, quartz, plastic, or the like. Examples of materials that can be used as the above plastic may include polyimide (PI), polyacrylate, polymethylmethacrylate (PMMA), polycarbonate (PC), polyethylenenaphthalate (PEN), polyvinylidene chloride, polyvinylidene difluoride (PVDF), polystyrene, ethylene vinylalcohol copolymer, polyethersulphone (PES), polyetherimide (PEI), polyphenylene sulfide (PPS), polyallylate, triacetyl cellulose (TAC), cellulose acetate propionate (CAP), and the like. These materials may be used alone or in combination with each other.

The active pattern ACT may be disposed on the substrate SUB. In an embodiment, the active pattern ACT may be formed of an oxide semiconductor material or a silicon semiconductor material.

Examples of the oxide semiconductor material that can be used for the active pattern ACT may include IGZO (InGaZnO), ITZO (InSnZnO), and the like. In some aspects, the oxide semiconductor material may further include indium (In), gallium (Ga), tin (Sn), zirconium (Zr), vanadium (V), hafnium (Hf), cadmium (Cd), germanium (Ge), chromium (Cr), titanium (Ti), and zinc (Zn). These materials may be used alone or in combination with each other.

Examples of the silicon semiconductor material that can be used for the active pattern ACT may include amorphous silicon, polycrystalline silicon, and the like.

The first insulating layer IL1 may be disposed on the substrate SUB and may cover the active pattern ACT. In an embodiment, the first insulating layer IL1 may be formed of an insulating material. Examples of the insulating material that can be used for the first insulating layer IL1 may include silicon oxide, silicon nitride, silicon oxynitride, and the like. These materials may be used alone or in combination with each other.

The first gate electrode GAT1 may be disposed on the first insulating layer IL1. In an embodiment, the first gate electrode GAT1 may include a conductive material such as a metal, an alloy, a metal oxide, or the like. For example, the first gate electrode GAT1 may include silver (Ag), an alloy containing silver, molybdenum (Mo), an alloy containing molybdenum, aluminium (Al), an alloy containing aluminium, aluminium nitride (AlN), tungsten (W), tungsten nitride (WN), copper (Cu), nickel (Ni), chromium (Cr), chromium nitride (CrN), titanium (Ti), tantalum (Ta), platinum (Pt), scandium (Sc), indium tin oxide (ITO), indium zinc oxide (IZO), or the like. These materials may be used alone or in combination with each other. In some aspects, the first gate electrode GAT1 may be formed as a single layer or as a multi-layer.

The second insulating layer IL2 may be disposed on the first insulating layer IL1 and may cover the first gate electrode GAT1. In an embodiment, the second insulating layer IL2 may be formed of an insulating material.

The second gate electrode GAT2 may be disposed on the second insulating layer IL2 and may overlap with the first gate electrode GAT1. In an embodiment, the second gate electrode GAT2 may include a conductive material such as a metal, an alloy, a metal oxide, or the like.

The third insulating layer IL3 may be disposed on the second insulating layer IL2 and may cover the second gate electrode GAT2. In an embodiment, the third insulating layer IL3 may be formed of an insulating material. Examples of the insulating material that can be used for the third insulating layer IL3 may include organic materials and/or inorganic materials. These materials may be used alone or in combination with each other.

The connection electrode SD may be disposed on the third insulating layer IL3 and may be connected to the active pattern ACT. In an embodiment, the connection electrode SD may include a conductive material such as a metal, an alloy, a metal oxide, or the like.

The fourth insulating layer IL4 may be disposed on the third insulating layer IL3 and may cover the connection electrode SD. In an embodiment, the fourth insulating layer IL4 may be formed of an insulating material. Examples of the insulating material that can be used for the fourth insulating layer IL4 may include organic materials and/or inorganic materials. These materials may be used alone or in combination with each other.

The first electrode ADE may be disposed on the fourth insulating layer IL4 and may be connected to the connection electrode SD. The first electrode ADE may function as an anode of a light-emitting element. In an embodiment, the first electrode ADE may include a conductive material such as a metal, an alloy, a metal oxide, or the like.

The pixel defining layer PDL may be disposed on the fourth insulating layer IL4 and may cover end portions of the first electrode ADE. In an embodiment, the pixel defining layer PDL may include an organic material. For example, the pixel defining layer PDL may include a photoresist, a polyacrylic resin, a polyimide resin, an acrylic resin, or the like. These materials may be used alone or in combination. In some aspects, the pixel defining layer PDL may be formed as a single layer or as a multi-layer.

The light-emitting layer EL may be disposed on the first electrode ADE. The light-emitting layer EL may include an organic light-emitting material. In an embodiment, the light-emitting layer EL may further include functional layers such as a hole transport layer, an electron transport layer, or the like.

The second electrode CTE may be disposed on the light-emitting layer EL. The second electrode CTE may function as a cathode of the light-emitting element. In an embodiment, the second electrode CTE may include a conductive material such as a metal, an alloy, a metal oxide, or the like.

The first thin film inorganic layer IOL1 may be disposed on the second electrode CTE, the thin film organic layer OL may be disposed on the first thin film inorganic layer IOL1, and the second thin film inorganic layer IOL2 may be disposed on the thin film organic layer OL. In an embodiment, the first thin film inorganic layer IOL1, the thin film organic layer OL, and the second thin film inorganic layer IOL2 may function as a thin film encapsulation layer.

Referring to FIG. 7, the lattice portion LP may be formed in the support member SM. A plurality of holes HL may be formed in the lattice portion LP (e.g., LP1, LP2, and LP3), and the holes HL may penetrate the support member SM. In an embodiment, the lattice portion LP may include a first lattice portion LP1, a second lattice portion LP2, and a third lattice portion LP3.

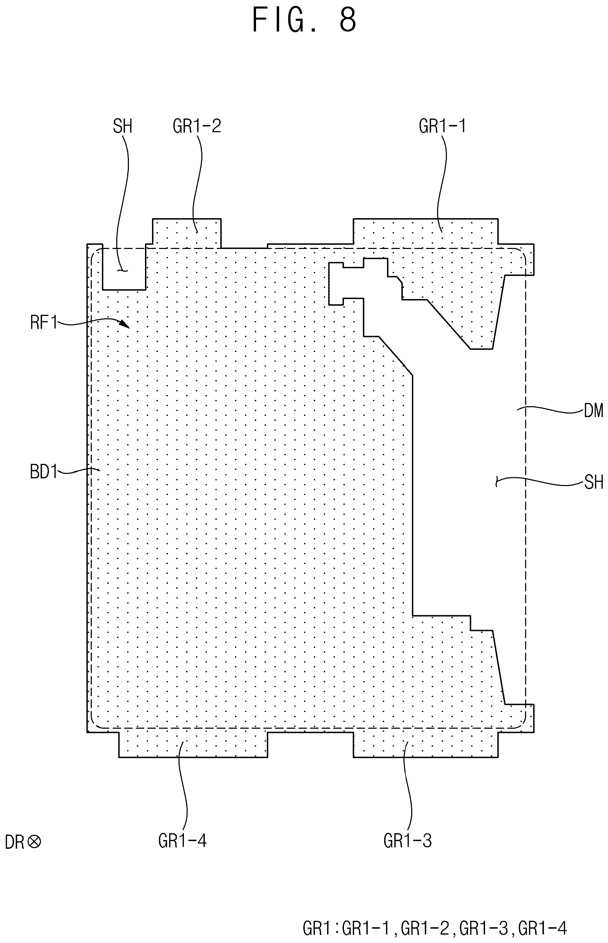

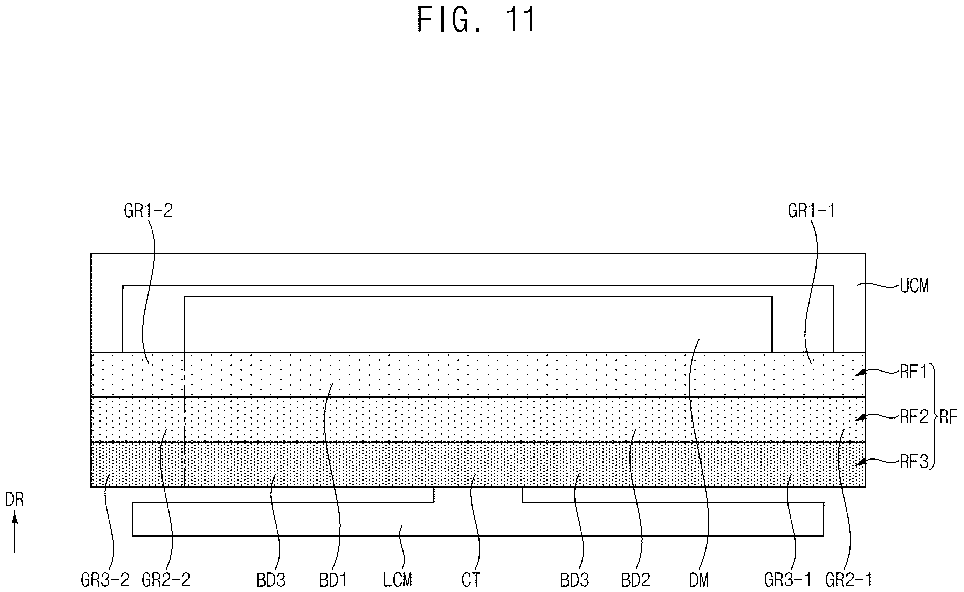

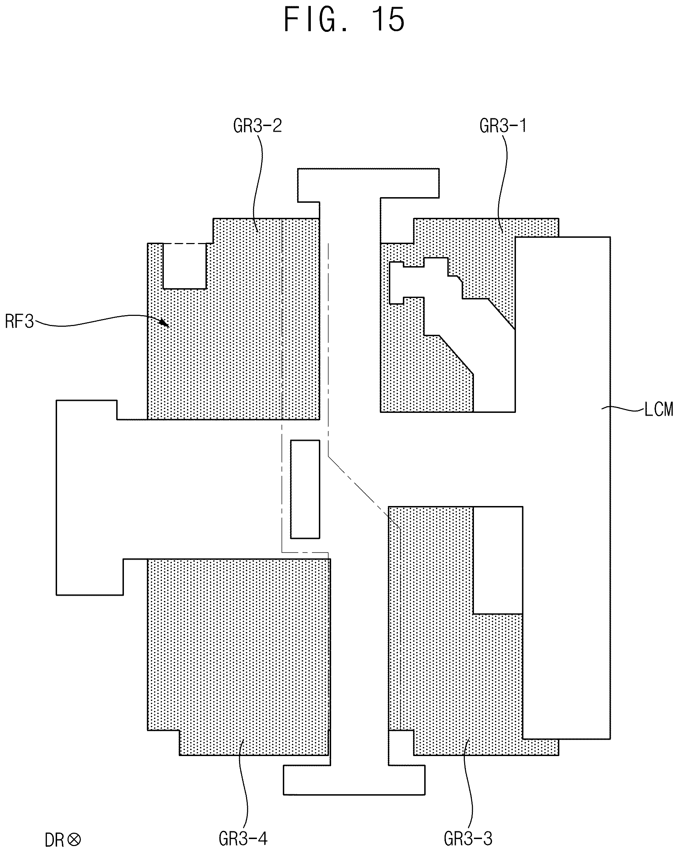

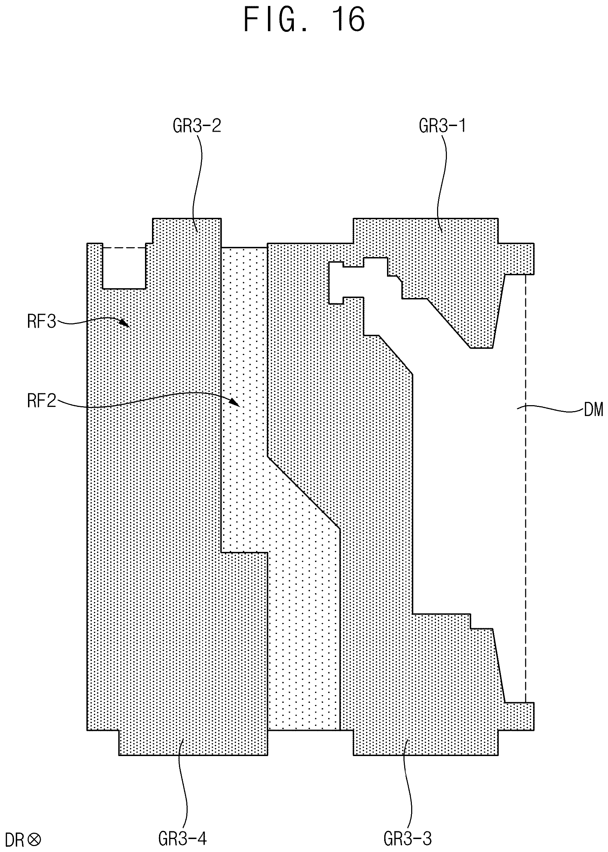

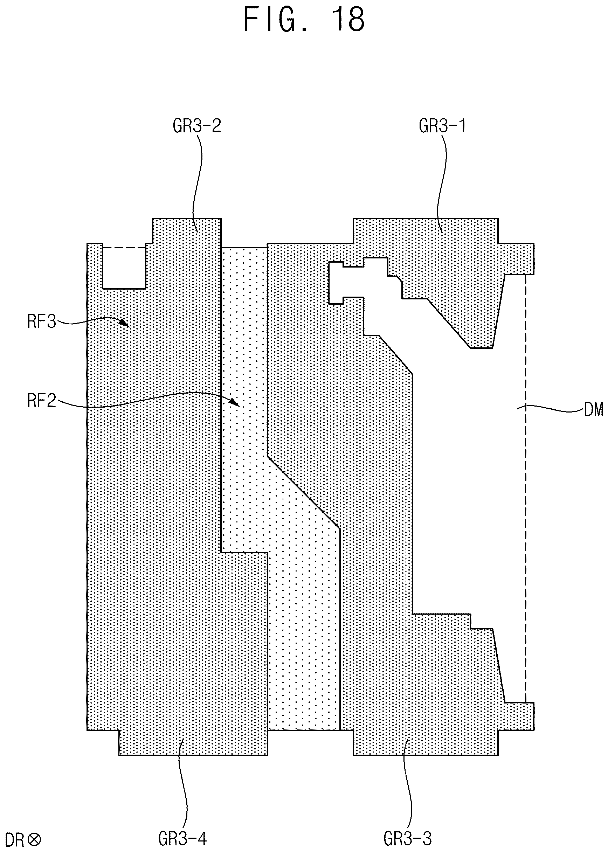

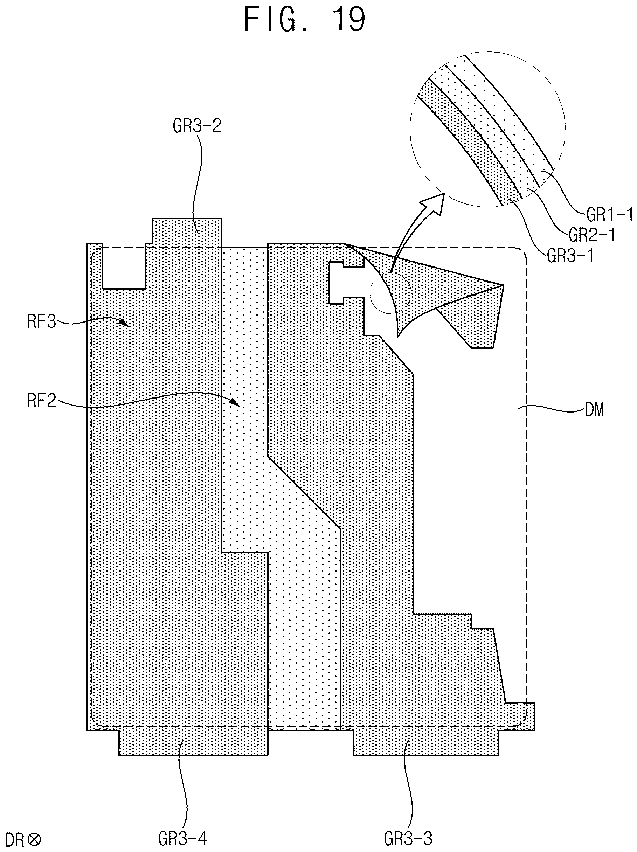

FIGS. 8 to 10 are rear views illustrating a release film according to embodiments, and FIGS. 11 to 20 are diagrams illustrating a method of manufacturing an electronic device using a release film according to embodiments.

In a process of manufacturing the electronic device 10, the display module DM may be transported, the display module DM may be stored, or the display module DM may be inspected for defects. In this case, a release film may be attached to the display module DM in order to protect the display module DM. Thereafter, in order to improve the yield of the electronic device 10, smoothly detaching the release film from the display module DM may be desired.

Referring to FIG. 8, a first sub-release film RF1 may be attached to the bottom surface (or referred to as a back surface, a rear surface, and the like) of the display module DM. In an embodiment, the first sub-release film RF1 may be formed of plastic, and the top surface and the bottom surface of the first sub-release film RF1 may be subjected to an adhesive treatment or a release treatment.

Examples of materials that can be used as the plastic may include polyimide (PI), polyacrylate, polymethylmethacrylate (PMMA), polycarbonate (PC), polyethylenenaphthalate (PEN), polyvinylidene chloride, polyvinylidene difluoride (PVDF), polystyrene, ethylene vinylalcohol copolymer, polyethersulphone (PES), polyetherimide (PEI), polyphenylene sulfide (PPS), polyallylate, triacetyl cellulose (TAC), cellulose acetate propionate (CAP), and the like. These materials may be used alone or in combination with each other.

In an embodiment, the first sub-release film RF1 may include a first body portion BD1 and a first grip portion GR1. For example, the first grip portion GR1 may include a first-first grip portion GR1-1, a first-second grip portion GR1-2, a first-third grip portion GR1-3, and a first-fourth grip portion GR1-4.

The first body portion BD1 may be attached to the display module DM. For example, the first body portion BD1 may overlap with the display module DM.

The first grip portion GR1 may protrude from the first body portion BD1. For example, the first grip portion GR1 may not overlap with the display module DM. While the first sub-release film RF1 is detached (or peeled) from the display module DM, the first grip portion GR1 may function as a handle.

The first-first grip portion GR1-1, the first-second grip portion GR1-2, the first-third grip portion GR1-3, and the first-fourth grip portion GR1-4 may be formed spaced apart from each other.

For example, the first sub-release film RF1 may be formed along at least one shape SH. The shape SH may be formed along a shape of a circuit board, a signal transmission board, a camera hole, or the like for driving the electronic device 10.

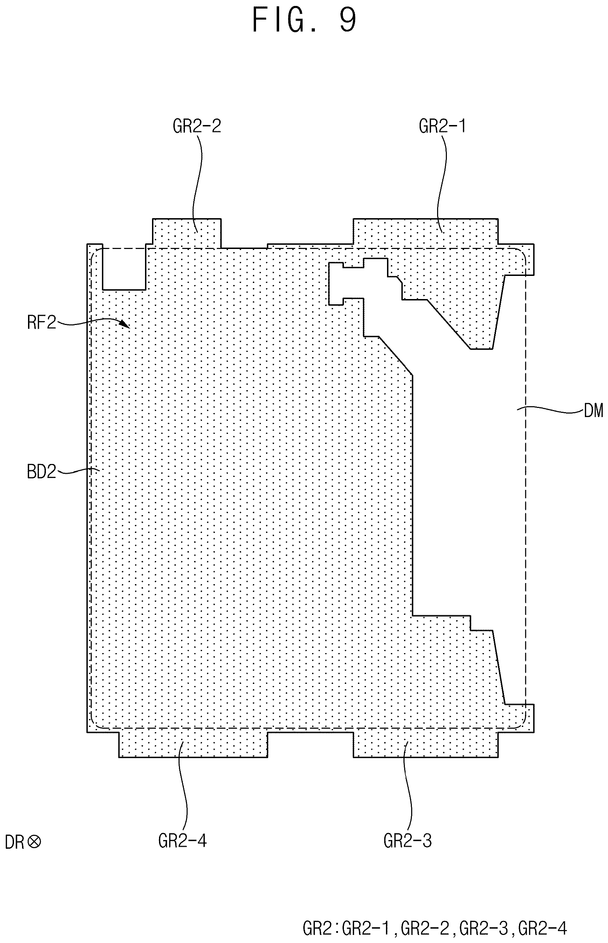

Referring to FIG. 9, a second sub-release film RF2 may be attached to the bottom surface of the first sub-release film RF1. In an embodiment, the second sub-release film RF2 may be formed of plastic, and the top surface and the bottom surface of the second sub-release film RF2 may be subjected to an adhesive treatment or a release treatment.

In an embodiment, the second sub-release film RF2 may have substantially the same shape as the first sub-release film RF1. The second sub-release film RF2 may include a second body portion BD2 and a second grip portion GR2. For example, the second grip portion GR2 may include a second-first grip portion GR2-1, a second-second grip portion GR2-2, a second-third grip portion GR2-3, and a second-fourth grip portion GR2-4.

The second body portion BD2 may be attached to the first body portion BD1. For example, the second body portion BD2 may overlap with the first body portion BD1 and the display module DM.

The second grip portion GR2 may protrude from the second body portion BD2. For example, the second grip portion GR2 may not overlap with the display module DM. While the first sub-release film RF1 is detached (or peeled) from the display module DM, the second grip portion GR2 may function as a handle together with the first grip portion GR1.

In an embodiment, the second grip portion GR2 may overlap with the first grip portion GR1. For example, the first grip portion GR1 and the second grip portion GR2 may be attached to each other.

The second-first grip portion GR2-1, the second-second grip portion GR2-2, the second-third grip portion GR2-3, and the second-fourth grip portion GR2-4 may be formed spaced apart from each other.

The first-first grip portion GR1-1, the first-second grip portion GR1-2, the first-third grip portion GR1-3, and the first-fourth grip portion GR1-4 may overlap with the second-first grip portion GR2-1, the second-second grip portion GR2-2, the second-third grip portion GR2-3, and the second-fourth grip portion GR2-4, respectively.

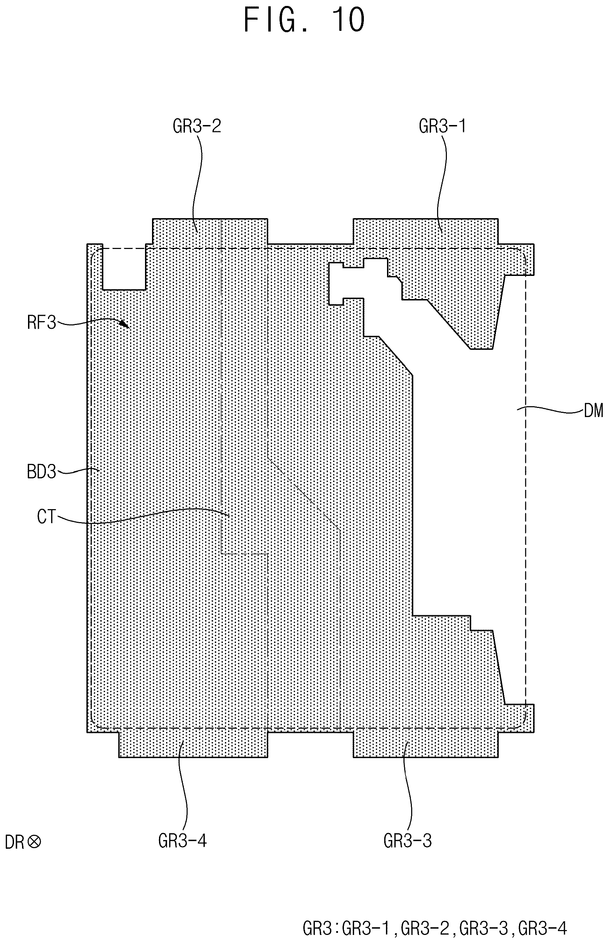

Referring to FIG. 10, a third sub-release film RF3 may be attached to the bottom surface of the second sub-release film RF2. In an embodiment, the third sub-release film RF3 may be formed of plastic, and the top surface of the third sub-release film RF3 may be subjected to an adhesive treatment or a release treatment.

In an embodiment, the third sub-release film RF3 may include a third body portion BD3, a third grip portion GR3, and a cut portion CT. For example, the third grip portion GR3 may include a third-first grip portion GR3-1, a third-second grip portion GR3-2, a third-third grip portion GR3-3, and a third-fourth grip portion GR3-4.

The third body portion BD3 may be attached to the second body portion BD2. For example, the third body portion BD3 may overlap with the second body portion BD2, the first body portion BD1, and the display module DM.

The third grip portion GR3 may protrude from the third body portion BD3. For example, the third grip portion GR3 may not overlap with the display module DM. While the first sub-release film RF1 is detached (or peeled) from the display module DM, the third grip portion GR3 may function as a handle together with the first grip portion GR1 and the second grip portion GR2.

In an embodiment, the third grip portion GR3 may overlap with the first and second grip portions GR1 and GR2. For example, the third grip portion GR3 and the second grip portion GR2 may be attached to each other.

The third-first grip portion GR3-1, the third-second grip portion GR3-2, the third-third grip portion GR3-3, and the third-fourth grip portion GR3-4 may be formed spaced apart from each other.

The first-first grip portion GR1-1, the first-second grip portion GR1-2, the first-third grip portion GR1-3, and the first-fourth grip portion GR1-4 may overlap with the second-first grip portion GR2-1, the second-second grip portion GR2-2, the second-third grip portion GR2-3, and the second-fourth grip portion GR2-4, respectively. The first-first grip portion GR1-1, the first-second grip portion GR1-2, the first-third grip portion GR1-3, and the first-fourth grip portion GR1-4 may overlap with the third-first grip portion GR3-1, the third-second grip portion GR3-2, the third-third grip portion GR3-3, and the third-fourth grip portion GR3-4, respectively.

The cut portion CT may be separated from the third body portion BD3 along a cutting line.

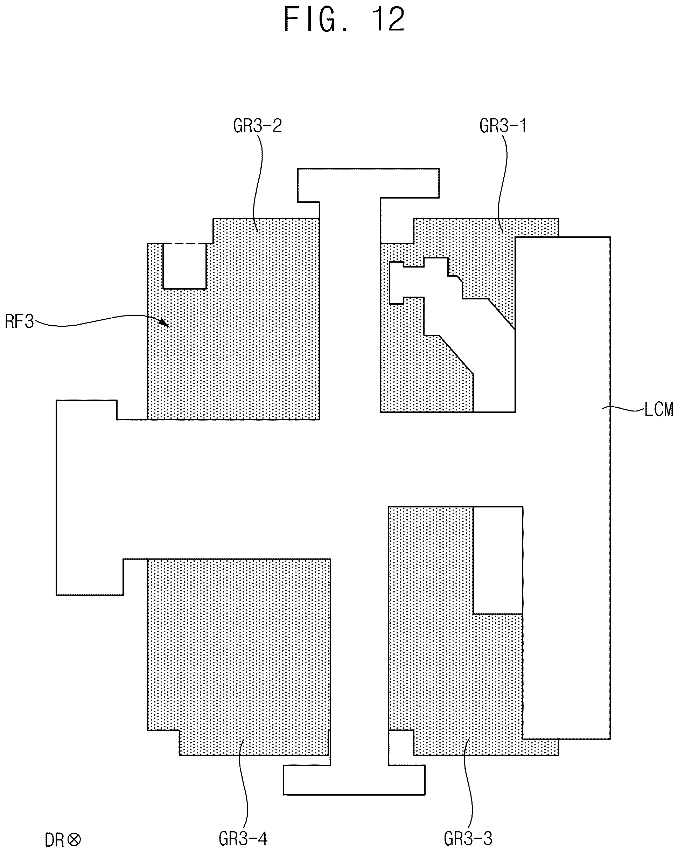

Referring to FIGS. 11 and 12, the release film RF may be disposed at the bottom of the display module DM, and the release film RF may include the first to third sub-release films RF1, RF2, and RF3.

The first sub-release film RF1 may be disposed under the display module DM, the second sub-release film RF2 may be disposed under the first sub-release film RF1, and the third sub-release film RF3 may be disposed under the second sub-release film RF3.

The first body portion BD1 may be attached to the bottom surface of the display module DM, the second body portion BD2 may be attached to the bottom surface of the first body portion BD1, and the third body portion BD3 and the cut portion CT may be attached to the bottom surface of the second body portion BD2.

An upper cover member UCM may be attached to the first grip portion GR1. For example, the upper cover member UCM may be attached to at least one of the first-first to first-fourth grip portions GR1-1, GR1-2, GR1-3, and GR1-4.

The second grip portion GR2 may be attached to the first grip portion GR1, and the third grip portion GR3 may be attached to the second grip portion GR2.

A lower cover member LCM may be attached to the cut portion CT.

In an embodiment, an adhesive force between the first sub-release film RF1 and the second sub-release film RF2 may be greater than an adhesive force between the first sub-release film RF1 and the display module DM. For example, the adhesive force between the first sub-release film RF1 and the second sub-release film RF2 may be greater than about 200 gf/in, and the adhesive force between the first sub-release film RF1 and the display module DM may be less than about 200 gf/in.

In other words, an adhesive force of the top surface of the first sub-release film RF1 may be relatively small, and an adhesive force of the top surface of the second sub-release film RF2 may be relatively large.

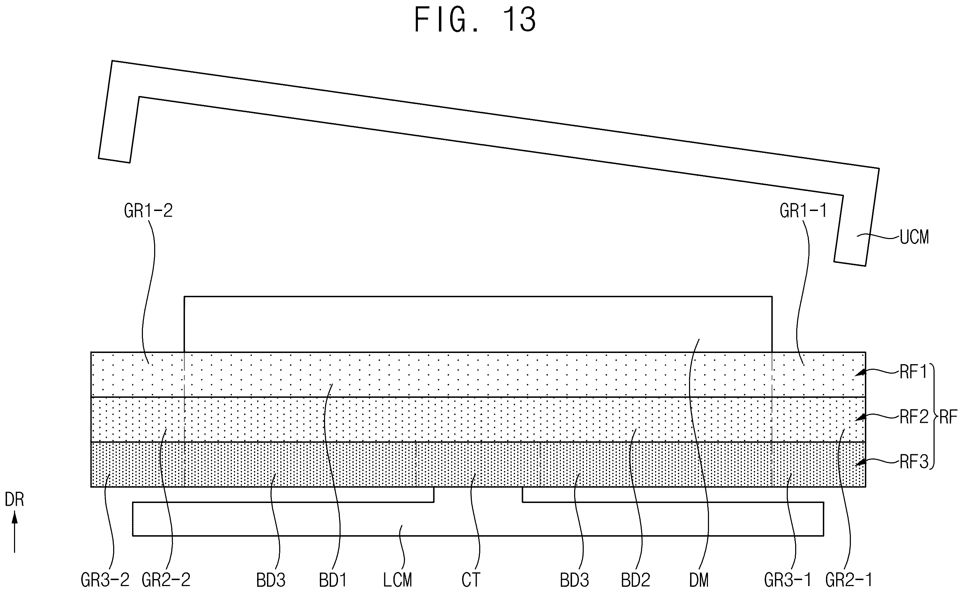

Referring to FIG. 13, the upper cover member UCM attached to the first grip portion GR1 may be detached from the first sub-release film RF1. As described herein, since the adhesive force of the top surface of the first sub-release film RF1 is relatively small, the upper cover member UCM may be smoothly detached.

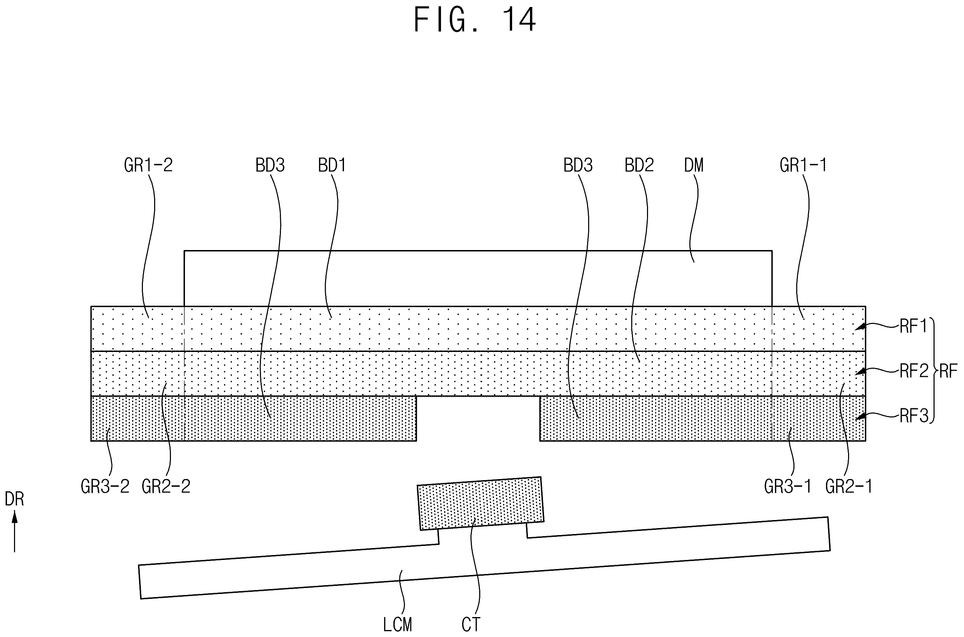

Referring to FIGS. 14, 15, and 16, the lower cover member LCM may be removed. In an embodiment, as the cut portion CT is removed along the cutting line, the lower cover member LCM attached to the cut portion CT may be removed.

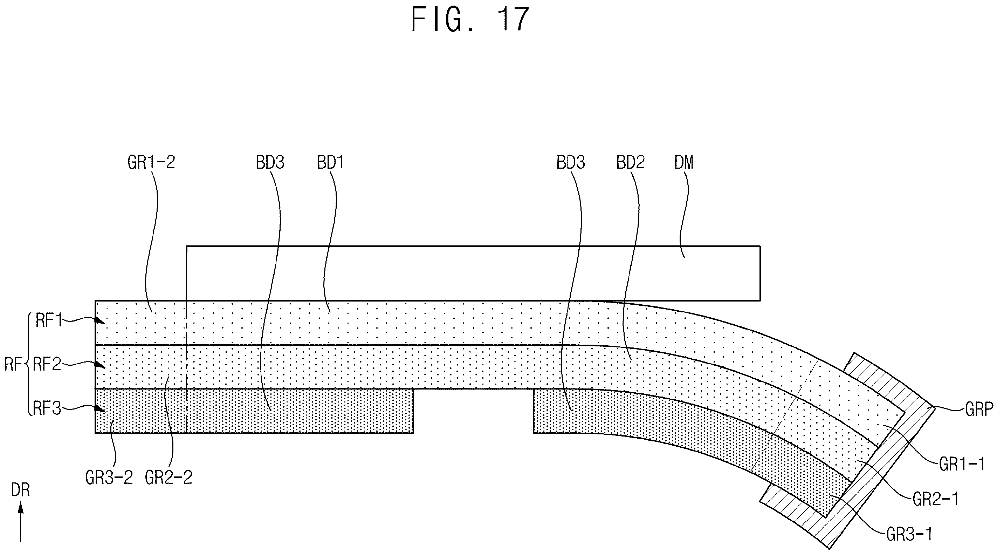

Referring to FIGS. 17, 18, and 19, the release film RF may be detached from the display module DM.

As described herein, the first grip portion GR1, the second grip portion GR2, and the third grip portion GR3 may overlap with each other and may not overlap with the display module DM. Accordingly, as illustrated in FIG. 17, the first-first grip portion GR1-1, the second-first grip portion GR2-1, and the third-first grip portion GR3-1 may be easily gripped together by a gripper GRP (e.g., a worker's hand).

While the first sub-release film RF1 is detached from the display module DM, the first-first grip portion GR1-1, the second-first grip portion GR2-1, and the third-first grip portion GR3-1 may be gripped together by the gripper GRP. Accordingly, while the first sub-release film RF1 is detached from the display module DM, the second sub-release film RF2 may remain attached to the first sub-release film RF1 and be detached together with the first sub-release film RF1 from the display module DM, and the third sub-release film RF3 may remain attached to the second sub-release film RF2 and be detached together with the second sub-release film RF2 from the display module DM.

The release film RF may include the first to third grip portions GR1, GR2, and GR3 that overlap with each other. While the release film RF is detached, the first to third grip portions GR1, GR2, and GR3 may be gripped together by the gripper GRP. Accordingly, the release film RF may be smoothly detached from the display module DM, and the yield of the electronic device 10 may be improved.

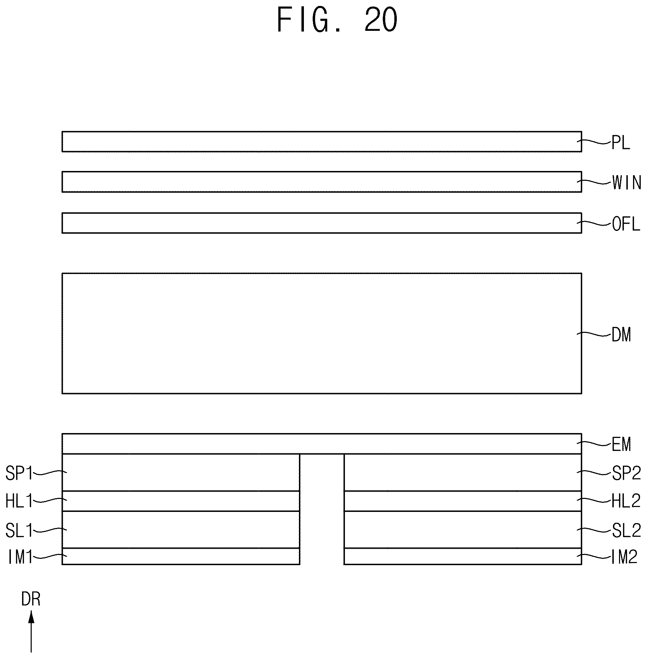

Referring to FIG. 20, the configurations described herein with reference to FIG. 4 may be disposed on and under of the display module DM from which the release film RF has been removed. Thus, the electronic device 10 may be manufactured.

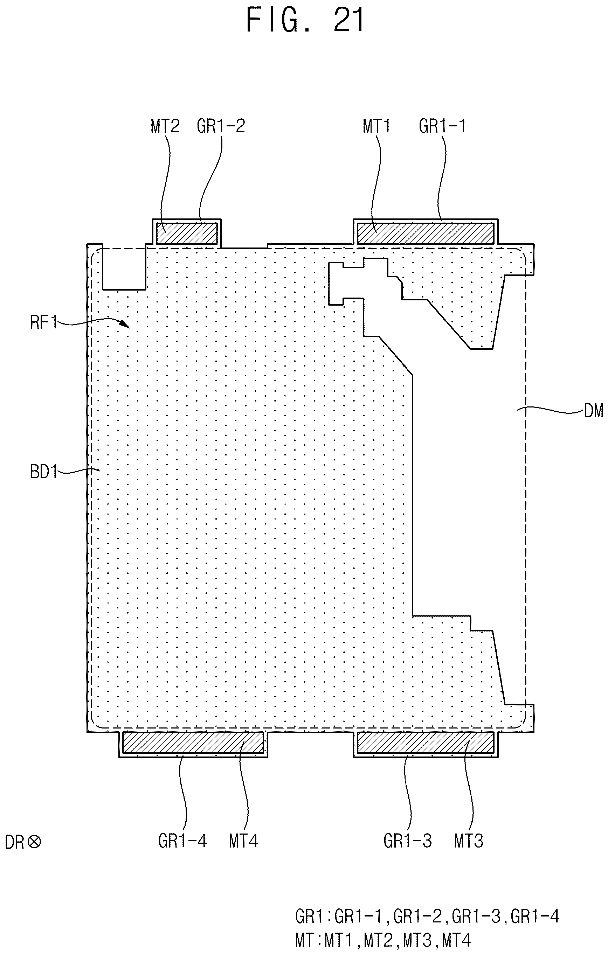

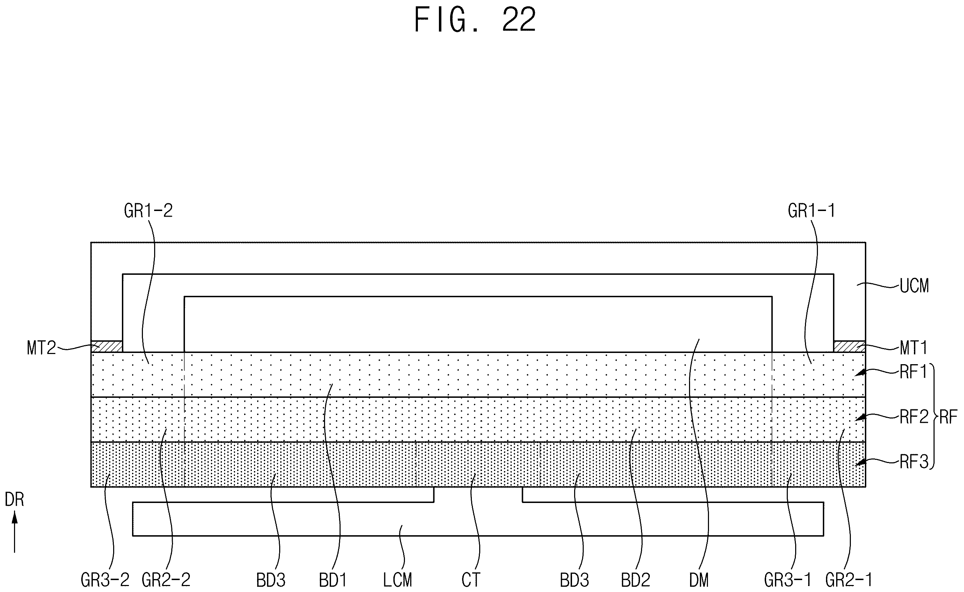

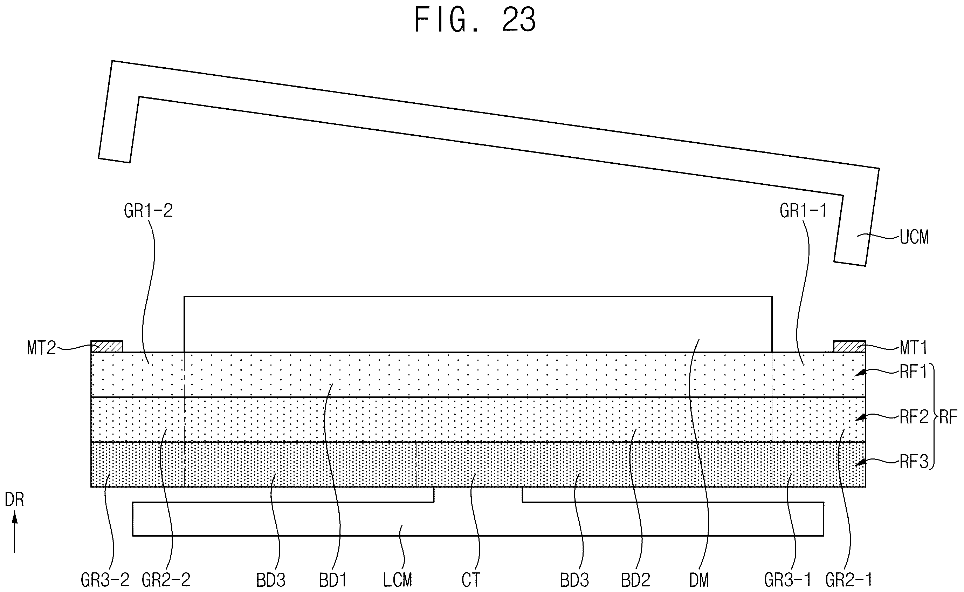

FIG. 21 is a rear view illustrating a release film according to embodiments, and FIGS. 22 and 23 are diagrams illustrating a method of manufacturing an electronic device using a release film according to embodiments.

Referring to FIG. 21, the first sub-release film RF1 may be attached to the bottom surface of the display module DM. In an embodiment, the first sub-release film RF1 may be formed of plastic, and the top surface and the bottom surface of the first sub-release film RF1 may be subjected to an adhesive treatment or a release treatment.

In an embodiment, the first sub-release film RF1 may include a first body portion BD1, a first grip portion GR1, and a masking tape MT. The first sub-release film RF1 may be substantially the same as the first sub-release film RF1 described herein with reference to FIG. 8, except for the masking tape MT.

For example, the masking tape MT may include a first masking tape MT1, a second masking tape MT2, a third masking tape MT3, and a fourth masking tape MT4.

The masking tape MT may be disposed on the first grip portion GR1. That is, the first masking tape MT1 may be disposed on the first-first grip portion GR1-1, the second masking tape MT2 may be disposed on the first-second grip portion GR1-2, the third masking tape MT3 may be disposed on the first-third grip portion GR1-3, and the fourth masking tape MT4 may be disposed on the first-fourth grip portion GR1-4.

Referring to FIG. 22, the upper cover member UCM may be attached on the masking tape MT.

Referring to FIG. 23, the upper cover member UCM may be detached from the masking tape MT. In an embodiment, a surface of the masking tape MT may be subjected to a release treatment. Accordingly, the upper cover member UCM may be detached more smoothly compared to other approaches.

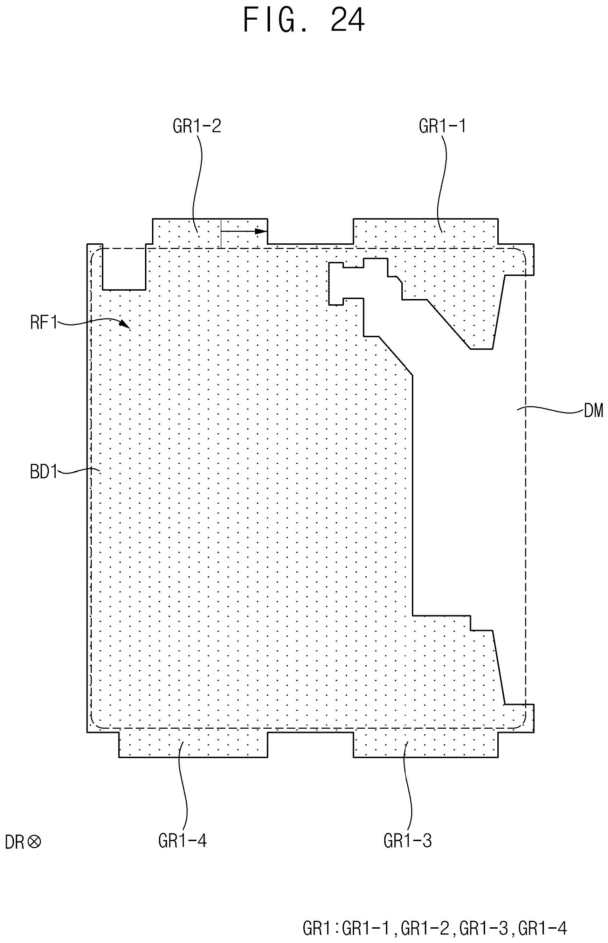

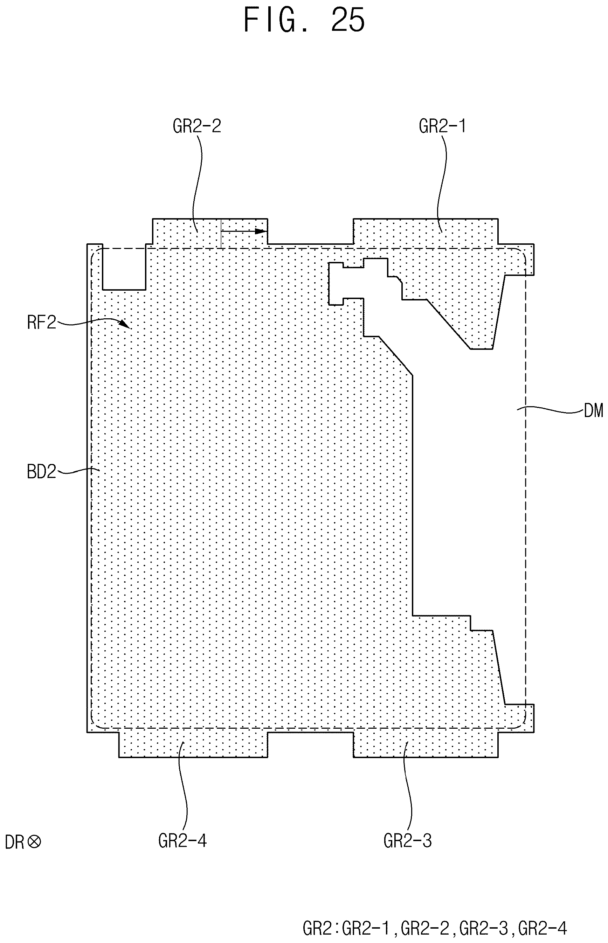

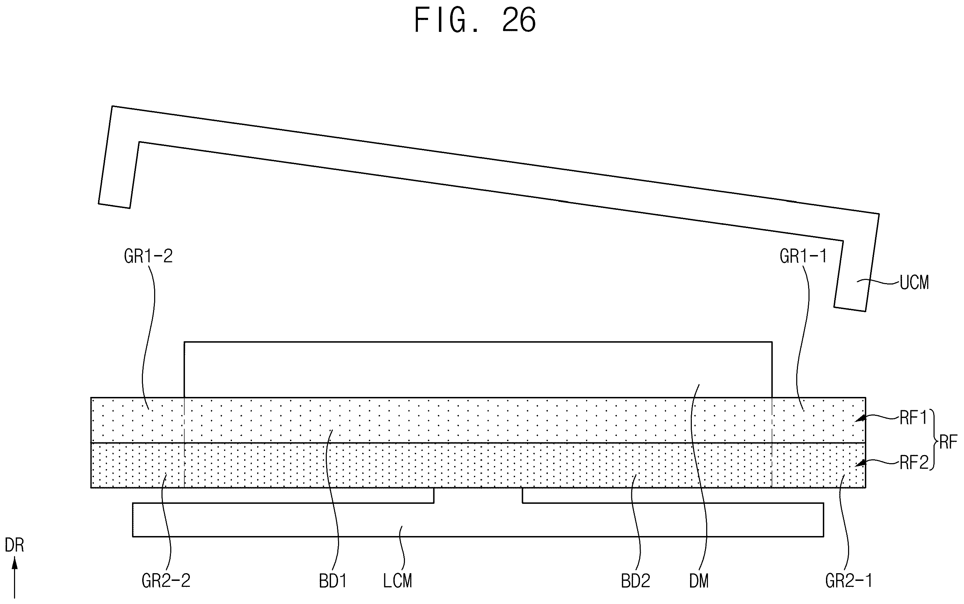

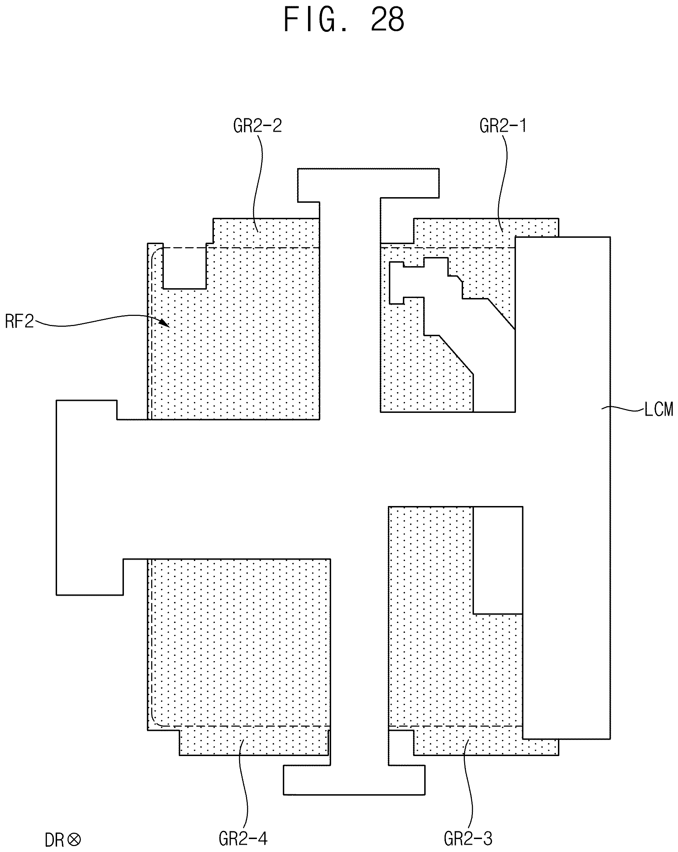

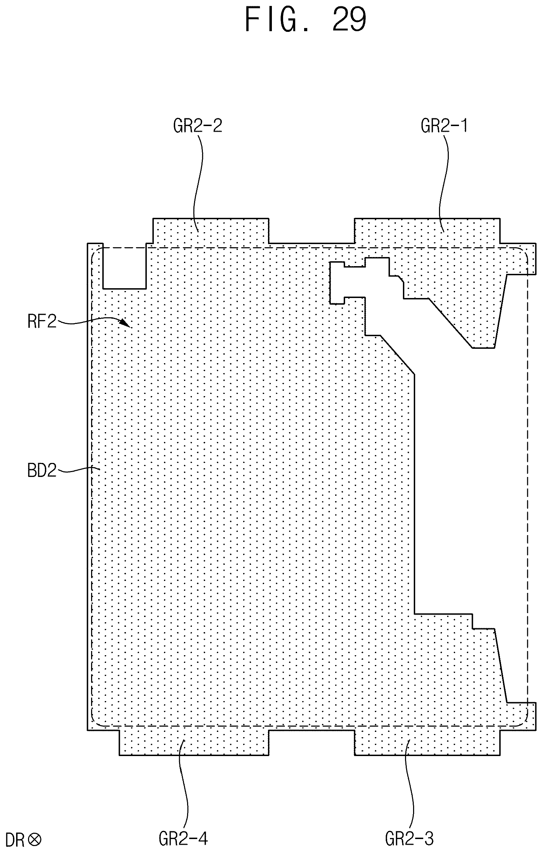

FIGS. 24 and 25 are rear views illustrating a release film according to embodiments, and FIGS. 26 to 31 are diagrams illustrating a method of manufacturing an electronic device using a release film according to embodiments.

Referring to FIG. 24, the first sub-release film RF1 may be attached to the bottom surface of the display module DM. In an embodiment, the first sub-release film RF1 may be formed of plastic, and the top surface and the bottom surface of the first sub-release film RF1 may be subjected to an adhesive treatment or a release treatment.

In an embodiment, the first sub-release film RF1 may include a first body portion BD1 and a first grip portion GR1. For example, the first grip portion GR1 may include a first-first grip portion GR1-1, a first-second grip portion GR1-2, a first-third grip portion GR1-3, and a first-fourth grip portion GR1-4.

The first grip portion GR1 may protrude from the first body portion BD1. For example, the first grip portion GR1 may not overlap with the display module DM. While the first sub-release film RF1 is detached (or peeled) from the display module DM, the first grip portion GR1 may function as a handle.

The first-first grip portion GR1-1, the first-second grip portion GR1-2, the first-third grip portion GR1-3, and the first-fourth grip portion GR1-4 may be formed spaced apart from each other.

In an embodiment, as illustrated in FIG. 24, a length of the first-second grip portion GR1-2 may be increased.

Referring to FIG. 25, the second sub-release film RF2 may be attached to the bottom surface of the first sub-release film RF1. In an embodiment, the second sub-release film RF2 may be formed of plastic, and the top surface and the bottom surface of the second sub-release film RF2 may be subjected to an adhesive treatment or a release treatment.

In an embodiment, the second sub-release film RF2 may have substantially the same shape as the first sub-release film RF1. The second sub-release film RF2 may include a second body portion BD2 and a second grip portion GR2. For example, the second grip portion GR2 may include a second-first grip portion GR2-1, a second-second grip portion GR2-2, a second-third grip portion GR2-3, and a second-fourth grip portion GR2-4.

The second body portion BD2 may be attached to the first body portion BD1. For example, the second body portion BD2 may overlap with the first body portion BD1 and the display module DM.

The second grip portion GR2 may protrude from the second body portion BD2. For example, the second grip portion GR2 may not overlap with the display module DM. While the first sub-release film RF1 is detached (or peeled) from the display module DM, the second grip portion GR2 may function as a handle together with the first grip portion GR1.

In an embodiment, the second grip portion GR2 may overlap with the first grip portion GR1. For example, the first grip portion GR1 and the second grip portion GR2 may be attached to each other.

The second-first grip portion GR2-1, the second-second grip portion GR2-2, the second-third grip portion GR2-3, and the second-fourth grip portion GR2-4 may be formed spaced apart from each other.

The first-first grip portion GR1-1, the first-second grip portion GR1-2, the first-third grip portion GR1-3, and the first-fourth grip portion GR1-4 may overlap with the second-first grip portion GR2-1, the second-second grip portion GR2-2, the second-third grip portion GR2-3, and the second-fourth grip portion GR2-4, respectively.

In an embodiment, as illustrated in FIG. 25, a length of the second-second grip portion GR2-2 may be increased.

Referring to FIG. 26, the release film RF may include the first sub-release film RF1 and the second sub-release film RF2. That is, the release film RF may be implemented without a third sub-release film (e.g., third sub-release film RF3) disposed under the second sub-release film RF2.

Accordingly, in implementing the release film RF without the third-second grip portion corresponding to the cut portion of the third sub-release film, a margin corresponding to a length of the third-second grip portion may be secured. Thus, lengths of the first-second grip portion GR1-2 and the second-second grip portion GR2-2 may be increased by the margin.

In some aspects, the lower cover member LCM may be attached to the second sub-release film RF2.

The upper cover member UCM attached to the first grip portion GR1 may be detached from the first sub-release film RF1. As described herein, since the adhesive force of the top surface of the first sub-release film RF1 is relatively low, the upper cover member UCM may be smoothly detached.

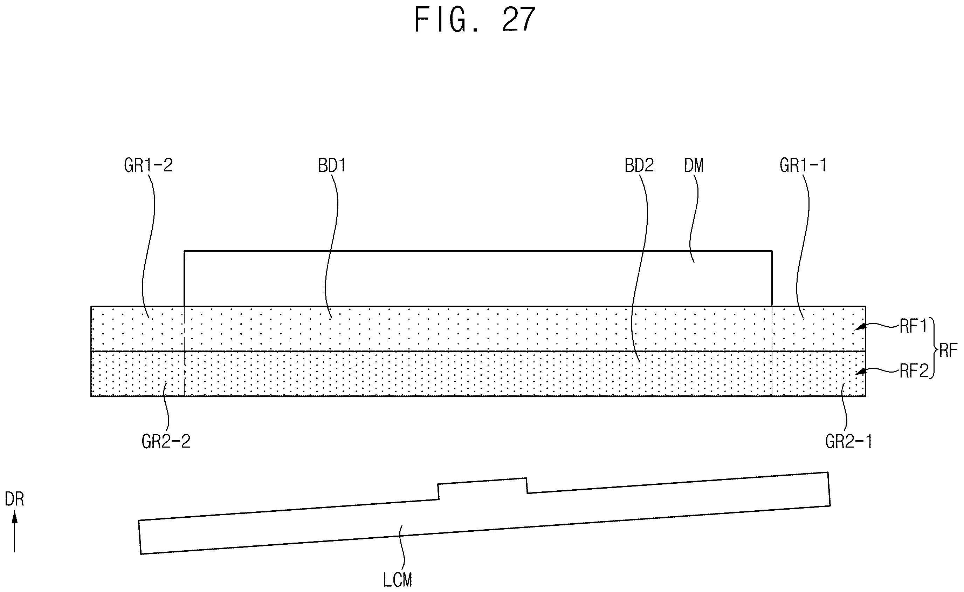

Referring to FIGS. 27, 28, and 29, the lower cover member LCM may be removed. In an embodiment, the adhesive force between the second sub-release film RF2 and the lower cover member LCM may be less than the adhesive force between the first sub-release film RF1 and the second sub-release film RF2. Accordingly, the lower cover member LCM may be smoothly detached.

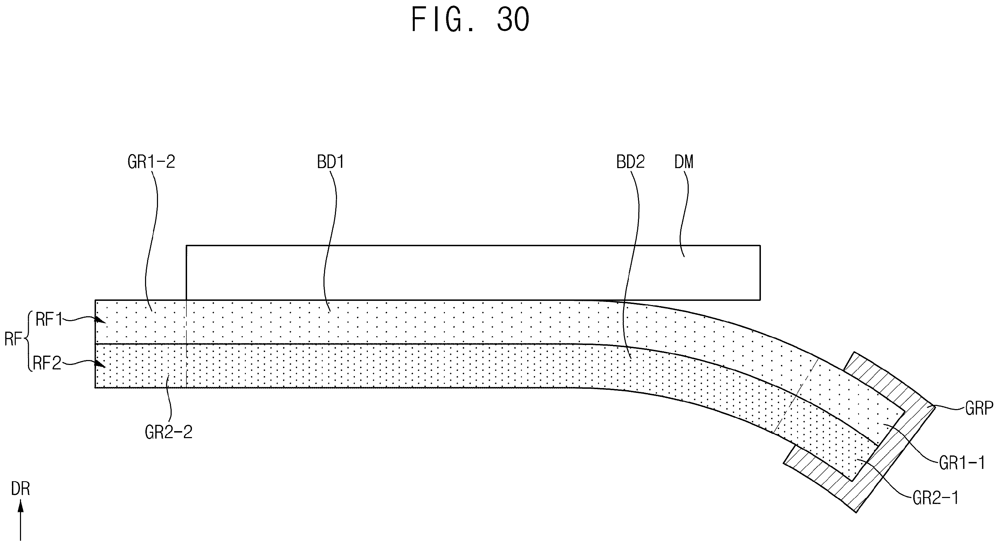

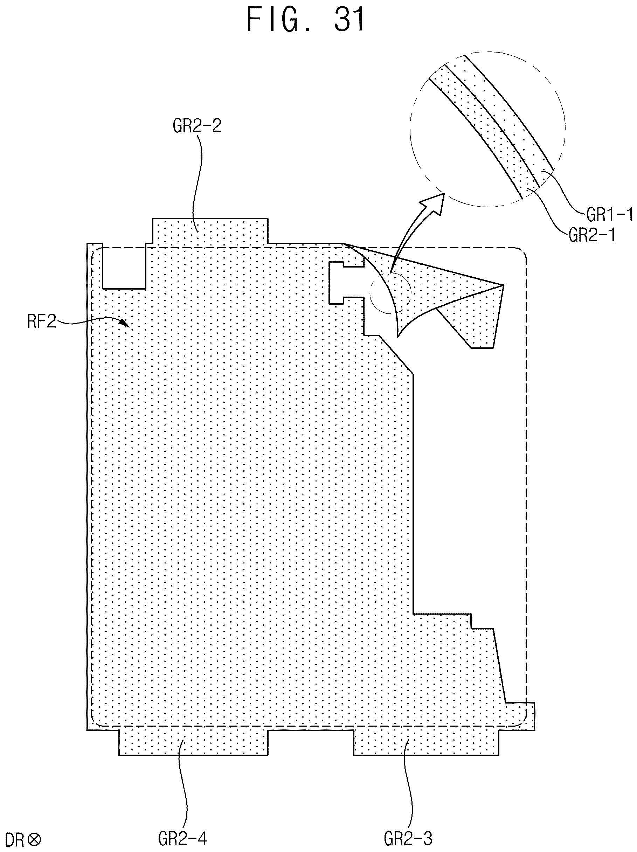

Referring to FIGS. 30 and 31, the release film RF may be detached from the display module DM.

The first grip portion GR1 and the second grip portion GR2 may overlap with each other and may not overlap with the display module DM. Accordingly, as illustrated in FIG. 30, the first-first grip portion GR1-1 and the second-first grip portion GR2-1 may be easily gripped together by a gripper GRP (e.g., a worker's hand).

While the first sub-release film RF1 is detached from the display module DM, the first-first grip portion GR1-1 and the second-first grip portion GR2-1 may be gripped together by the gripper GRP. Accordingly, while the first sub-release film RF1 is detached from the display module DM, the second sub-release film RF2 may remain attached to the first sub-release film RF1 and be detached together with the first sub-release film RF1.

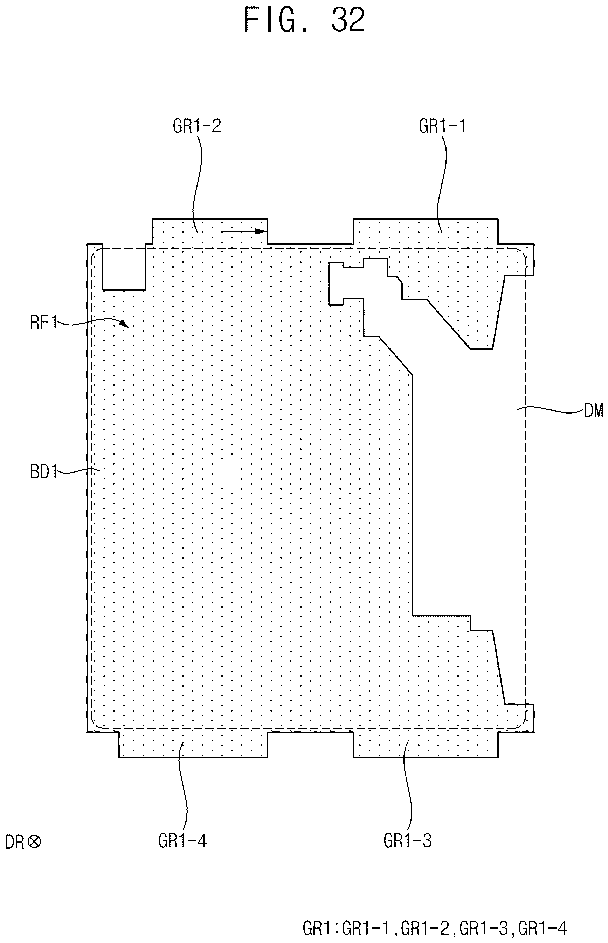

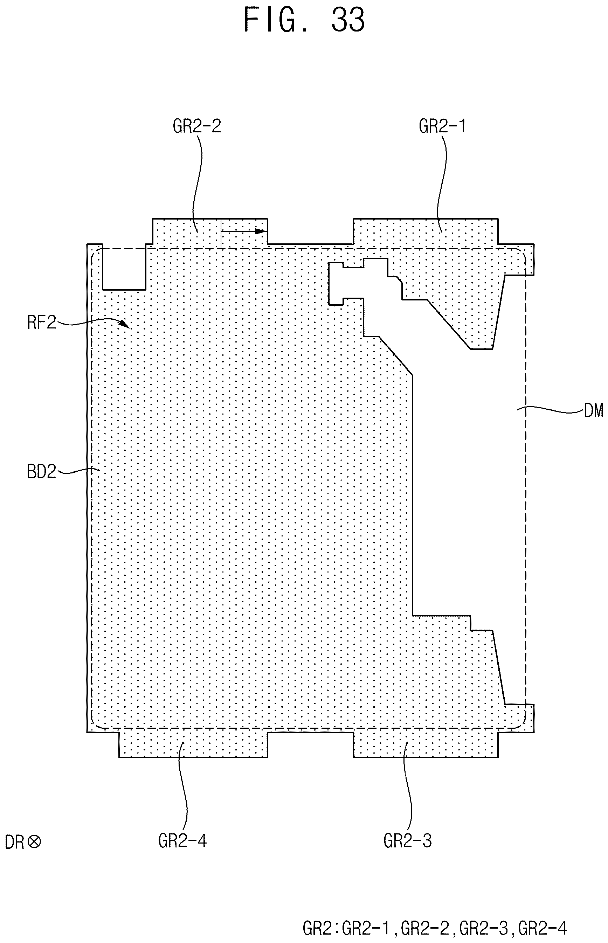

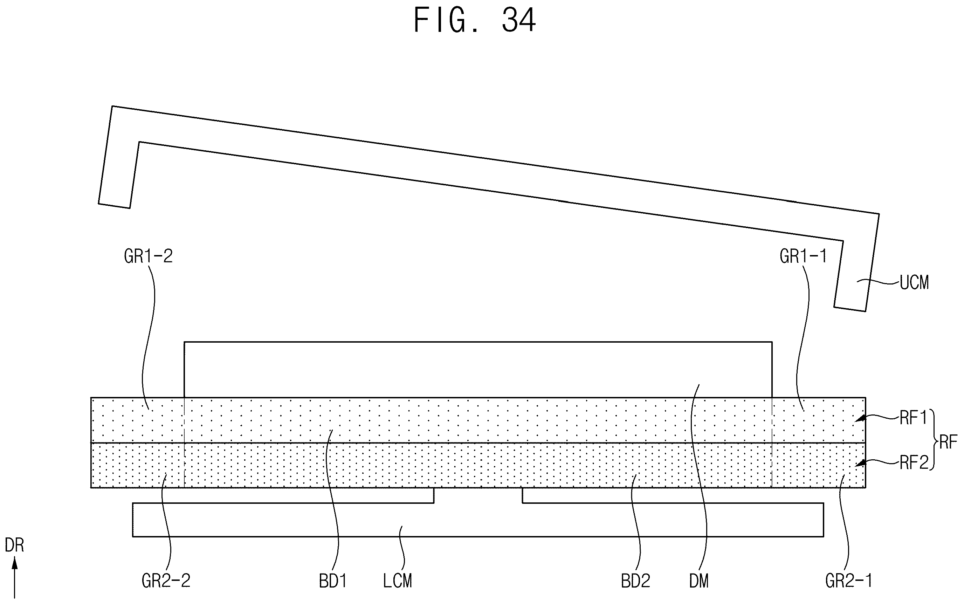

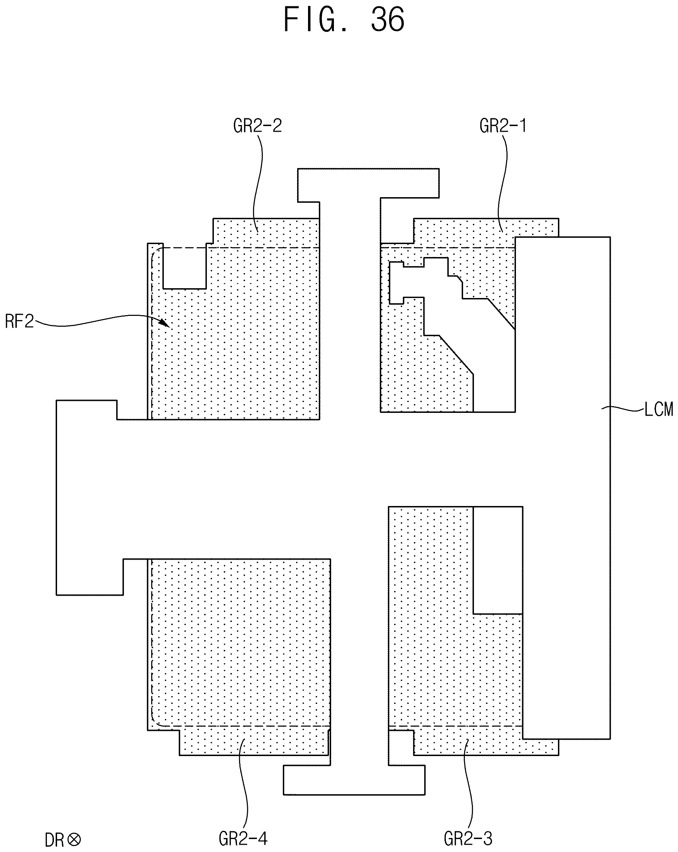

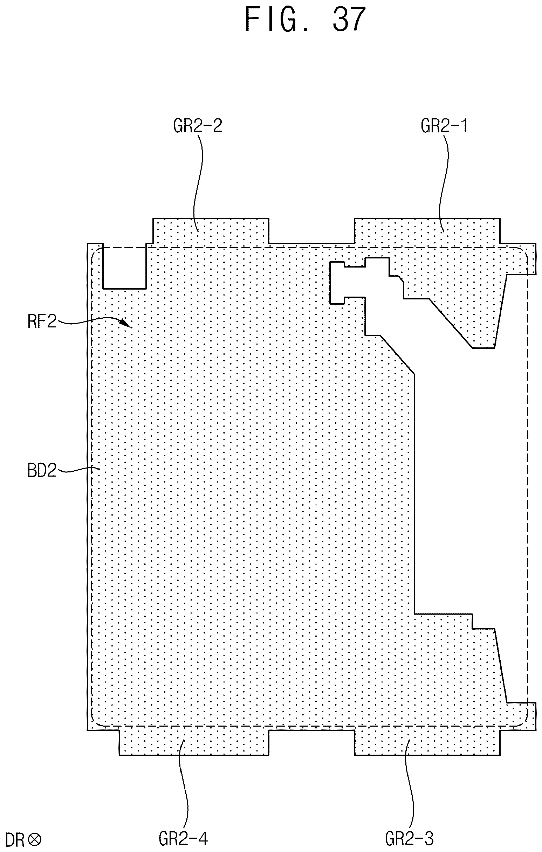

FIGS. 32 and 33 are rear views illustrating a release film according to embodiments, and FIGS. 34 to 39 are diagrams illustrating a method of manufacturing an electronic device using a release film according to embodiments.

Referring to FIG. 32, the first sub-release film RF1 may be attached to the bottom surface of the display module DM. In an embodiment, the first sub-release film RF1 may be formed of plastic, and the top surface and the bottom surface of the first sub-release film RF1 may be subjected to an adhesive treatment or a release treatment.

In an embodiment, the first sub-release film RF1 may include a first body portion BD1 and a first grip portion GR1. For example, the first grip portion GR1 may include a first-first grip portion GR1-1, a first-second grip portion GR1-2, a first-third grip portion GR1-3, and a first-fourth grip portion GR1-4.

The first grip portion GR1 may protrude from the first body portion BD1. For example, the first grip portion GR1 may not overlap with the display module DM. While the first sub-release film RF1 is detached (or peeled) from the display module DM, the first grip portion GR1 may function as a handle.

The first-first grip portion GR1-1, the first-second grip portion GR1-2, the first-third grip portion GR1-3, and the first-fourth grip portion GR1-4 may be formed spaced apart from each other.

In an embodiment, as illustrated in FIG. 32, a length of the first-second grip portion GR1-2 may be increased.

Referring to FIG. 33, the second sub-release film RF2 may be attached to the bottom surface of the first sub-release film RF1. In an embodiment, the second sub-release film RF2 may be formed of plastic, and the top surface and the bottom surface of the second sub-release film RF2 may be subjected to an adhesive treatment or a release treatment. For example, the bottom surface of the second sub-release film RF2 may be subjected to a release treatment.

In an embodiment, the second sub-release film RF2 may have substantially the same shape as the first sub-release film RF1. The second sub-release film RF2 may include a second body portion BD2 and a second grip portion GR2. For example, the second grip portion GR2 may include a second-first grip portion GR2-1, a second-second grip portion GR2-2, a second-third grip portion GR2-3, and a second-fourth grip portion GR2-4.

The second body portion BD2 may be attached to the first body portion BD1. For example, the second body portion BD2 may overlap with the first body portion BD1 and the display module DM.

The second grip portion GR2 may protrude from the second body portion BD2. For example, the second grip portion GR2 may not overlap with the display module DM. While the first sub-release film RF1 is detached (or peeled) from the display module DM, the second grip portion GR2 may function as a handle together with the first grip portion GR1.

In an embodiment, the second grip portion GR2 may overlap with the first grip portion GR1. For example, the first grip portion GR1 and the second grip portion GR2 may be attached to each other.

The second-first grip portion GR2-1, the second-second grip portion GR2-2, the second-third grip portion GR2-3, and the second-fourth grip portion GR2-4 may be formed spaced apart from each other.

The first-first grip portion GR1-1, the first-second grip portion GR1-2, the first-third grip portion GR1-3, and the first-fourth grip portion GR1-4 may overlap with the second-first grip portion GR2-1, the second-second grip portion GR2-2, the second-third grip portion GR2-3, and the second-fourth grip portion GR2-4, respectively.

In an embodiment, as illustrated in FIG. 33, a length of the second-second grip portion GR2-2 may be increased.

Referring to FIG. 34, the release film RF may include the first sub-release film RF1 and the second sub-release film RF2. That is, the release film RF may be implemented without a third sub-release film (e.g., third sub-release film RF3) disposed under the second sub-release film RF2.

Accordingly, in implementing the release film RF without the third-second grip portion corresponding to the cut portion of the third sub-release film, a margin corresponding to the length of the third-second grip portion may be secured. Thus, the lengths of the first-second grip portion GR1-2 and the second-second grip portion GR2-2 may be increased by the margin.

In some aspects, the lower cover member LCM may be attached to the second sub-release film RF2.

The upper cover member UCM attached to the first grip portion GR1 may be detached from the first sub-release film RF1. As described herein, since the adhesive force of the top surface of the first sub-release film RF1 is relatively low, the upper cover member UCM may be smoothly detached.

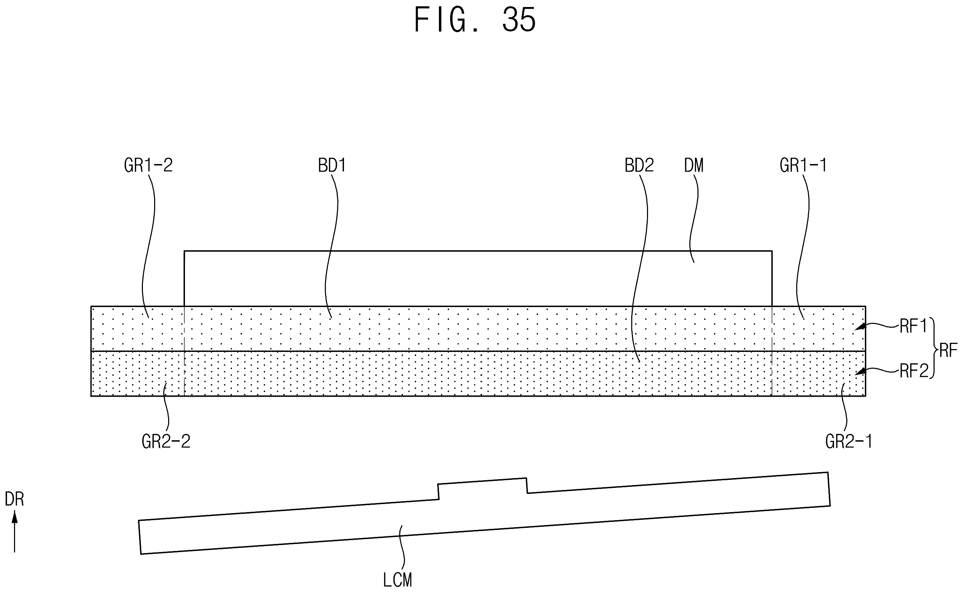

Referring to FIGS. 35, 36, and 37, the lower cover member LCM may be removed. In an embodiment, the bottom surface of the second sub-release film RF2 may be release-treated. Accordingly, the lower cover member LCM may be smoothly detached.

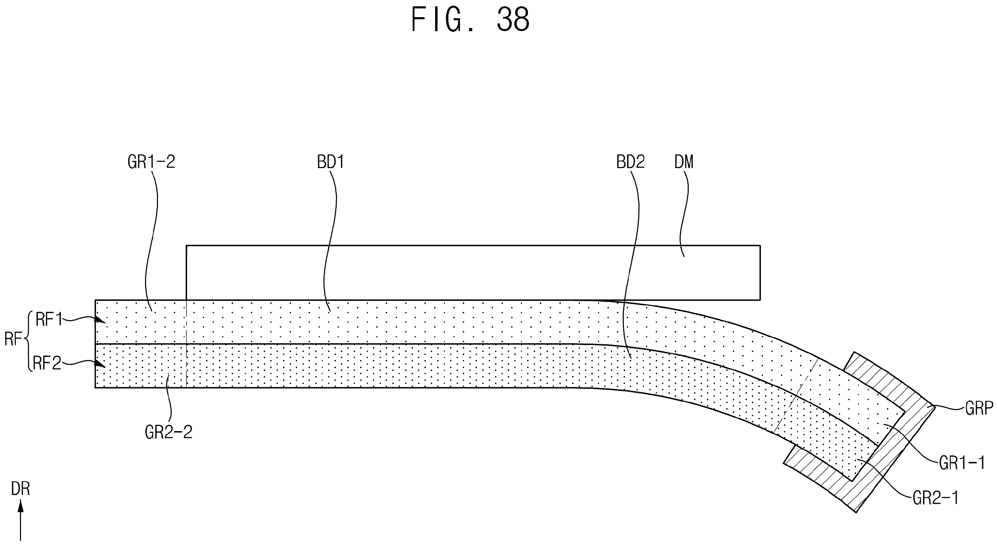

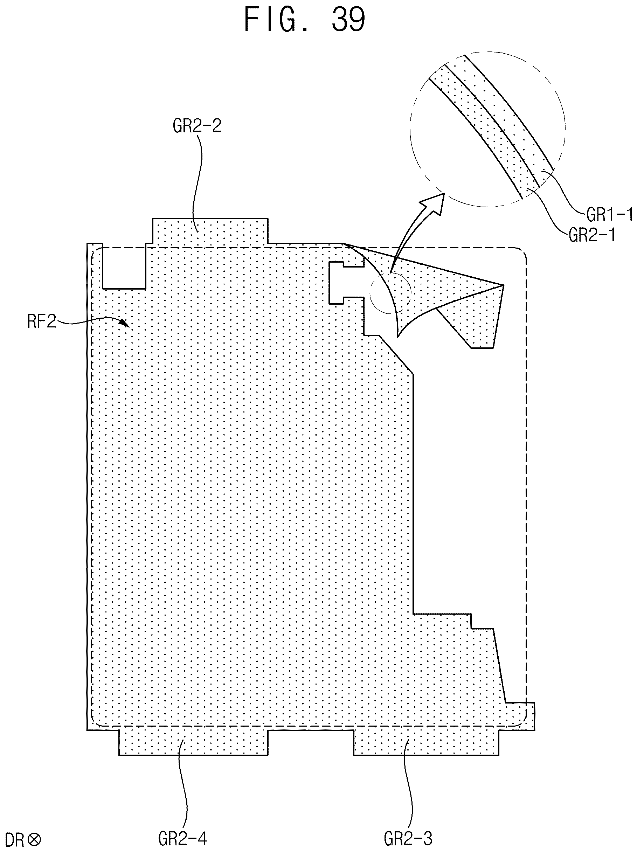

Referring to FIGS. 38 and 39, the release film RF may be detached from the display module DM.

The first grip portion GR1 and the second grip portion GR2 may overlap with each other and may not overlap with the display module DM. Accordingly, as illustrated in FIG. 38, the first-first grip portion GR1-1 and the second-first grip portion GR2-1 may be easily gripped together by a gripper GRP (e.g., a worker's hand).

While the first sub-release film RF1 is detached from the display module DM, the first-first grip portion GR1-1 and the second-first grip portion GR2-1 may be gripped together by the gripper GRP. Accordingly, while the first sub-release film RF1 is detached from the display module DM, the second sub-release film RF2 may remain attached to the first sub-release film RF1 and be detached together with the first sub-release film RF1.

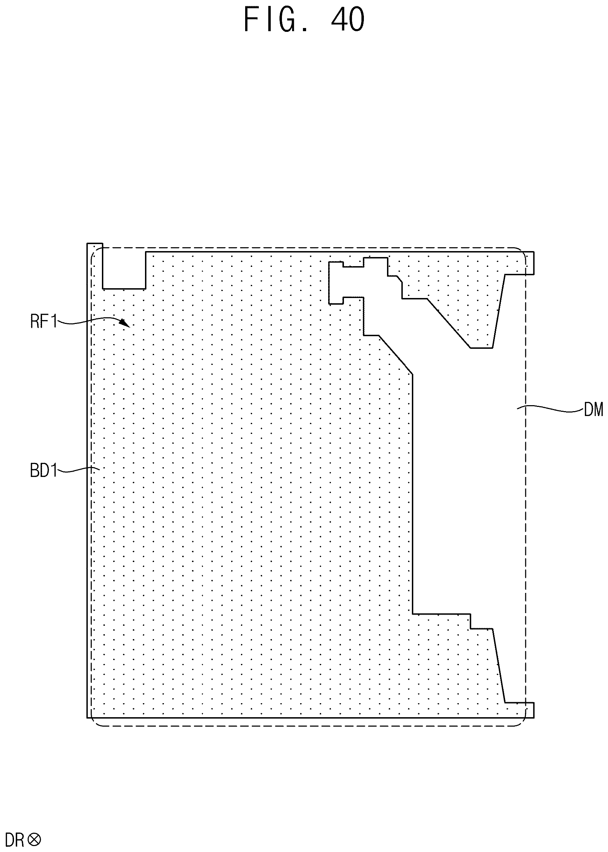

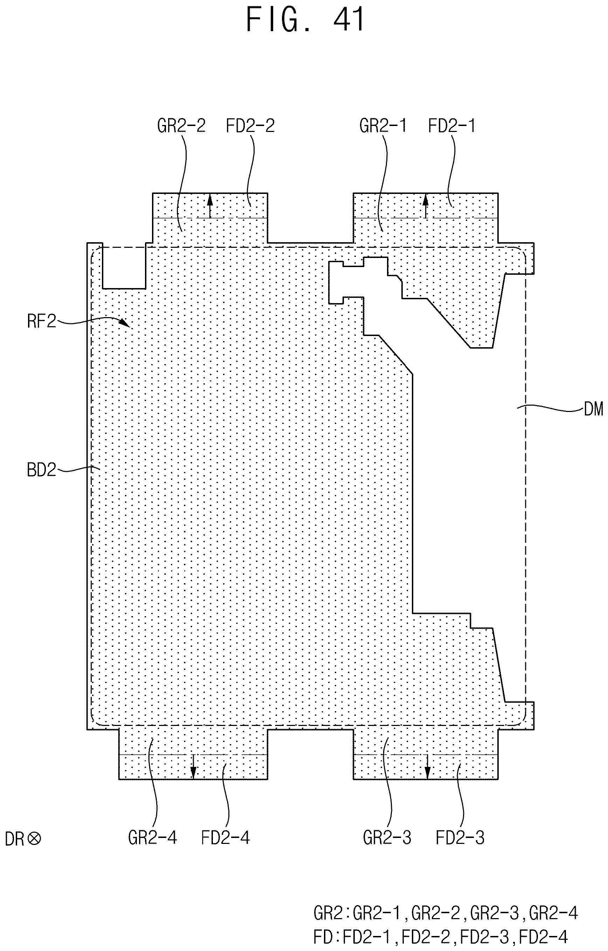

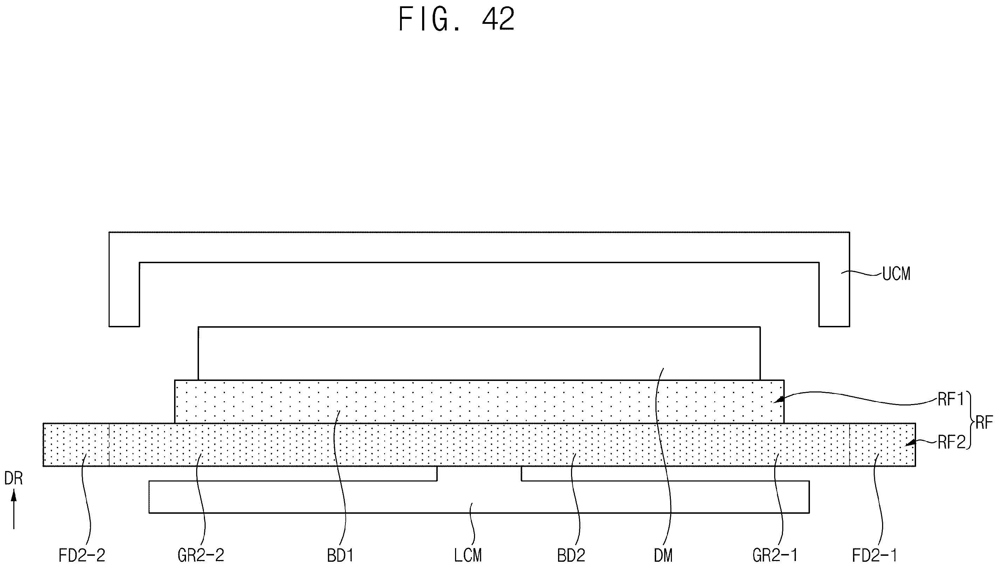

FIGS. 40 and 41 are rear views illustrating a release film according to embodiments, and FIGS. 42 to 46 are diagrams illustrating a method of manufacturing an electronic device using a release film according to embodiments.

Referring to FIG. 40, the first sub-release film RF1 may be attached to the bottom surface of the display module DM. In an embodiment, the first sub-release film RF1 may be formed of plastic, and the top surface and the bottom surface of the first sub-release film RF1 may be subjected to an adhesive treatment or a release treatment.

In an embodiment, the first sub-release film RF1 may include a first body portion BD1. In some aspects, the first sub-release film RF1 may be implemented without a grip portion.

Referring to FIG. 41, the second sub-release film RF2 may be attached to the bottom surface of the first sub-release film RF1. In an embodiment, the second sub-release film RF2 may be formed of plastic, and the top surface and the bottom surface of the second sub-release film RF2 may be subjected to an adhesive treatment or a release treatment.

In an embodiment, the second sub-film RF2 may include a second body portion BD2, a second grip portion GR2, and a folding portion FD. For example, the second grip portion GR2 may include a second-first grip portion GR2-1, a second-second grip portion GR2-2, a second-third grip portion GR2-3, and a second-fourth grip portion GR2-4, and the folding portion FD may include a first folding portion FD2-1, a second folding portion FD2-2, a third folding portion FD2-3, and a fourth folding portion FD2-4.

The second body portion BD2 may be attached to the first body portion BD1. For example, the second body portion BD2 may overlap with the first body portion BD1 and the display module DM.

The second grip portion GR2 may protrude from the second body portion BD2. For example, the second grip portion GR2 may not overlap with the display module DM. While the first sub-release film RF1 is detached (or peeled) from the display module DM, the second grip portion GR2 may function as a handle together with the folding portion FD.

The second-first grip portion GR2-1, the second-second grip portion GR2-2, the second-third grip portion GR2-3, and the second-fourth grip portion GR2-4 may be formed spaced apart from each other.

The folding portion FD may extend from the second grip portion GR2. For example, the folding portion FD may not overlap with the display module DM. While the first sub-release film RF1 is detached (or peeled) from the display module DM, the folding portion FD may function as a handle together with the second grip portion GR2.

The first folding portion FD2-1 may extend from the second-first grip portion GR2-1, the second folding portion FD2-2 may extend from the second-second grip portion GR2-2, the third folding portion FD2-3 may extend from the second-third grip portion GR2-3, and the fourth folding portion FD2-4 may extend from the second-fourth grip portion GR2-4.

Referring to FIG. 42, the release film RF may include the first sub-release film RF1 and the second sub-release film RF2. That is, the release film RF may be implemented without a third sub-release film (e.g., third sub-release film RF3) disposed under the second sub-release film RF2.

Accordingly, the lower cover member LCM may be attached to the second sub-release film RF2.

In an embodiment, the bottom surface of the second body portion BD2 attached to the lower cover member LCM may be release-treated. In some aspects, the bottom surface of the folding portion FD may be release-treated together with the bottom surface of the second body portion BD2.

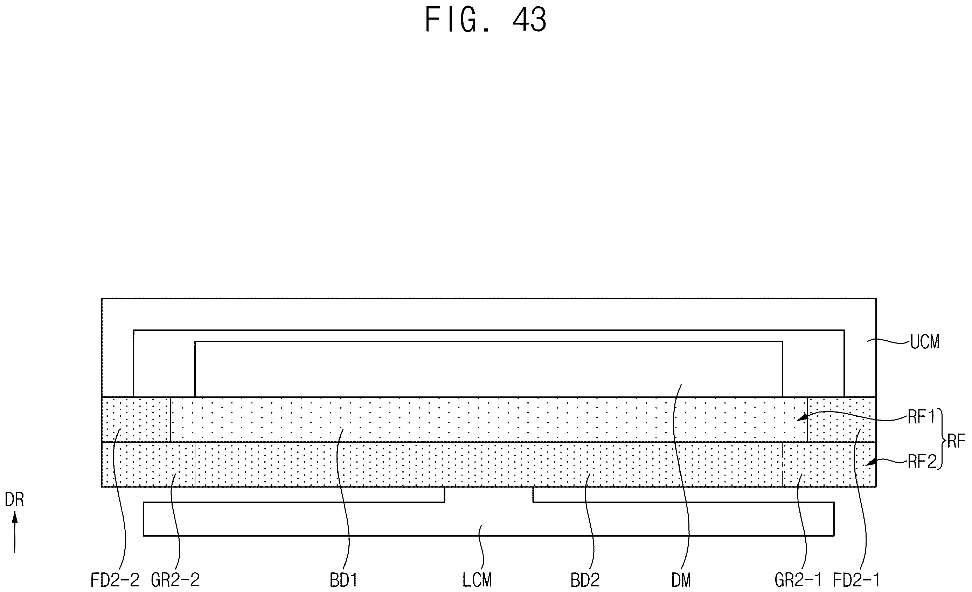

Referring to FIG. 43, the folding portion FD may be folded such that the folding portion FD overlaps with the second grip portion GR2. For example, a folding line may be formed between the second grip portion GR2 and the folding portion FD, and the folding portion FD may be folded with respect to the folding line. Accordingly, the folding portion FD may be disposed on the second grip portion GR2 and may overlap with the second grip portion GR2. In some aspects, the upper cover member UCM may be attached to the bottom surface of the folding portion FD because the bottom surface of the folding portion FD faces upward after the folding portion FD is folded.

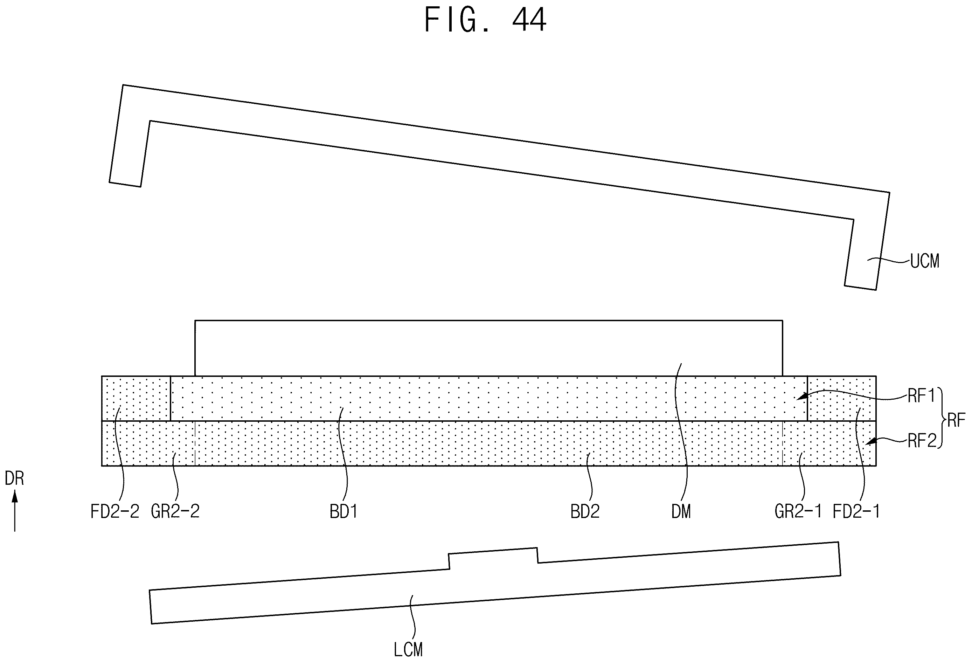

Referring to FIG. 44, the upper cover member UCM and the lower cover member LCM may be sequentially detached. In this case, as the bottom surface of the folding portion FD is release-treated, the upper cover member UCM may be smoothly detached. In some aspects, as the bottom surface of the second body portion BD2 is release-treated, the lower cover member LCM may be smoothly detached.

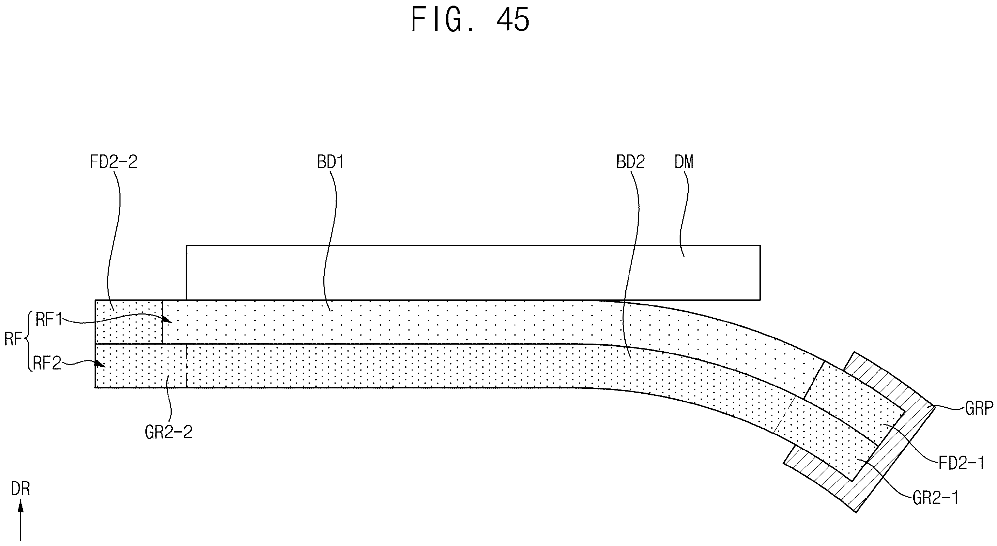

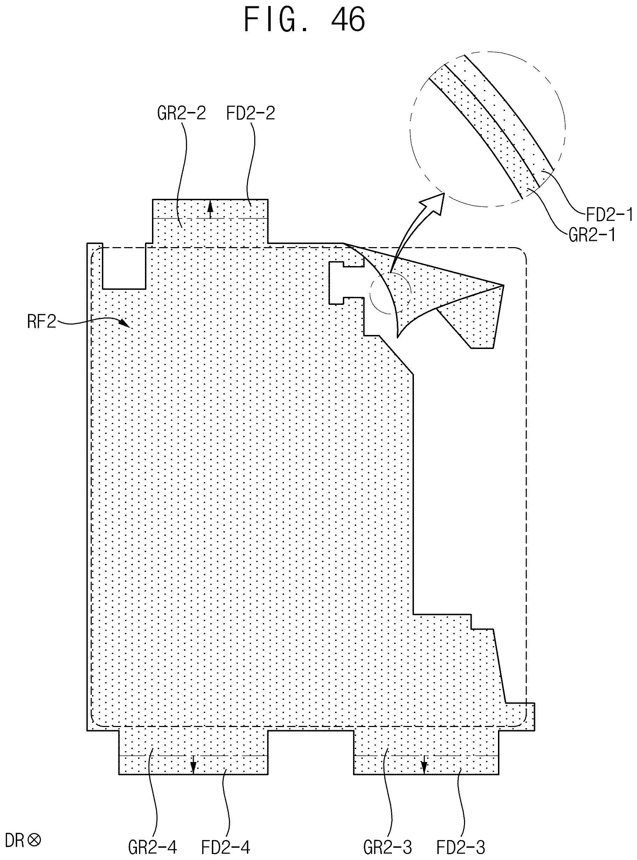

Referring to FIGS. 45 and 46, the release film RF may be detached from the display module DM.

The folding portion FD and the second grip portion GR2 may overlap with each other and may not overlap the display module DM. Accordingly, as illustrated in FIG. 45, the first folding portion FD2-1 and the second-first grip portion GR2-1 may be easily gripped together by a gripper GRP (e.g., a worker's hand).

While the first sub-release film RF1 is detached from the display module DM, the first folding portion FD2-1 and the second-first grip portion GR2-1 may be gripped together by the gripper GRP. Accordingly, while the first sub-release film RF1 is detached from the display module DM, the second sub-release film RF2 may remain attached to the first sub-release film RF1 and be detached together with the first sub-release film RF1.

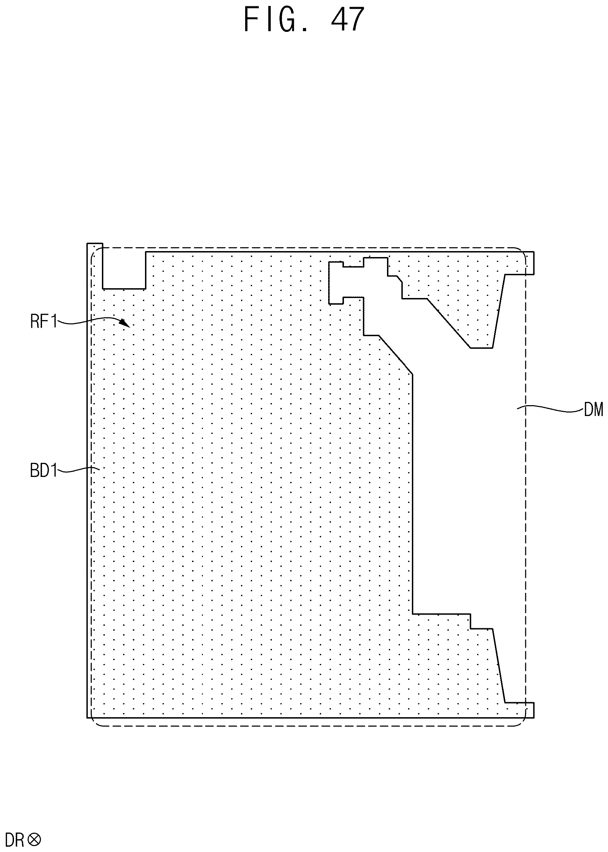

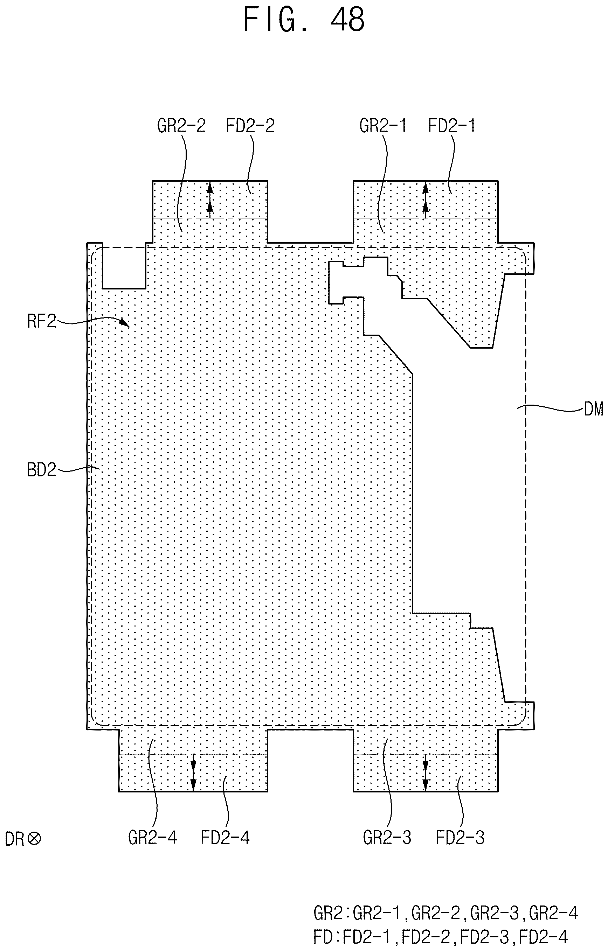

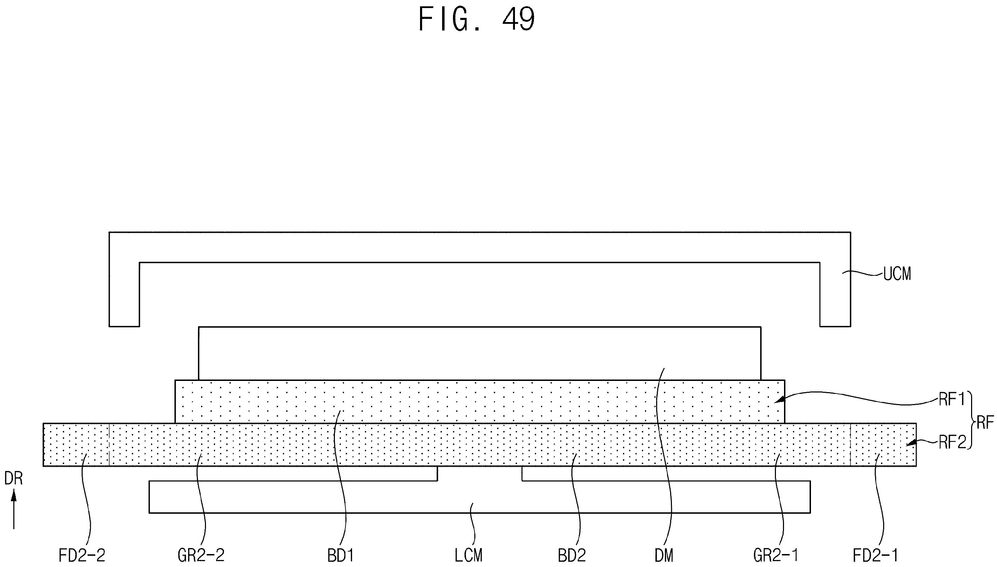

FIGS. 47 and 48 are rear views illustrating a release film according to embodiments, and FIGS. 49 to 53 are diagrams illustrating a method of manufacturing an electronic device using a release film according to embodiments.

Referring to FIG. 47, the first sub-release film RF1 may be attached to the bottom surface of the display module DM. In an embodiment, the first sub-release film RF1 may be formed of plastic, and the top surface and the bottom surface of the first sub-release film RF1 may be subjected to an adhesive treatment or a release treatment.

In an embodiment, the first sub-release film RF1 may include a first body portion BD1. In some aspects, the first sub-release film RF1 may be implemented without a grip portion.

Referring to FIG. 48, the second sub-release film RF2 may be attached to the bottom surface of the first sub-release film RF1. In an embodiment, the second sub-release film RF2 may be formed of plastic, and the top surface and the bottom surface of the second sub-release film RF2 may be subjected to an adhesive treatment or a release treatment.

In an embodiment, the second sub-release film RF2 may include a second body portion BD2, a second grip portion GR2, and a folding portion FD. For example, the second grip portion GR2 may include a second-first grip portion GR2-1, a second-second grip portion GR2-2, a second-third grip portion GR2-3, and a second-fourth grip portion GR2-4, and the folding portion FD may include a first folding portion FD2-1, a second folding portion FD2-2, a third folding portion FD2-3, and a fourth folding portion FD2-4.

The second body portion BD2 may be attached to the first body portion BD1. For example, the second body portion BD2 may overlap with the first body portion BD1 and the display module DM.

The second grip portion GR2 may protrude from the second body portion BD2. For example, the second grip portion GR2 may not overlap with the display module DM. While the first sub-release film RF1 is detached (or peeled) from the display module DM, the second grip portion GR2 may function as a handle together with the folding portion FD.

The second-first grip portion GR2-1, the second-second grip portion GR2-2, the second-third grip portion GR2-3, and the second-fourth grip portion GR2-4 may be formed spaced apart from each other.

The folding portion FD may extend from the second grip portion GR2. For example, the folding portion FD may not overlap with the display module DM. While the first sub-release film RF1 is detached (or peeled) from the display module DM, the folding portion FD may function as a handle together with the second grip portion GR2.

The first folding portion FD2-1 may extend from the second-first grip portion GR2-1, the second folding portion FD2-2 may extend from the second-second grip portion GR2-2, the third folding portion FD2-3 may extend from the second-third grip portion GR2-3, and the fourth folding portion FD2-4 may extend from the second-fourth grip portion GR2-4.

Referring to FIG. 49, the release film RF may include the first sub-release film RF1 and the second sub-release film RF2. That is, the release film RF may be implemented without a third sub-release film (e.g., third sub-release film RF3) disposed under the second sub-release film RF2.

Accordingly, the lower cover member LCM may be attached to the second sub-release film RF2.

In an embodiment, the bottom surface of the second body portion BD2 attached to the lower cover member LCM may be release-treated. In some aspects, the bottom surface of the folding portion FD may be release-treated together with the bottom surface of the second body portion BD2.

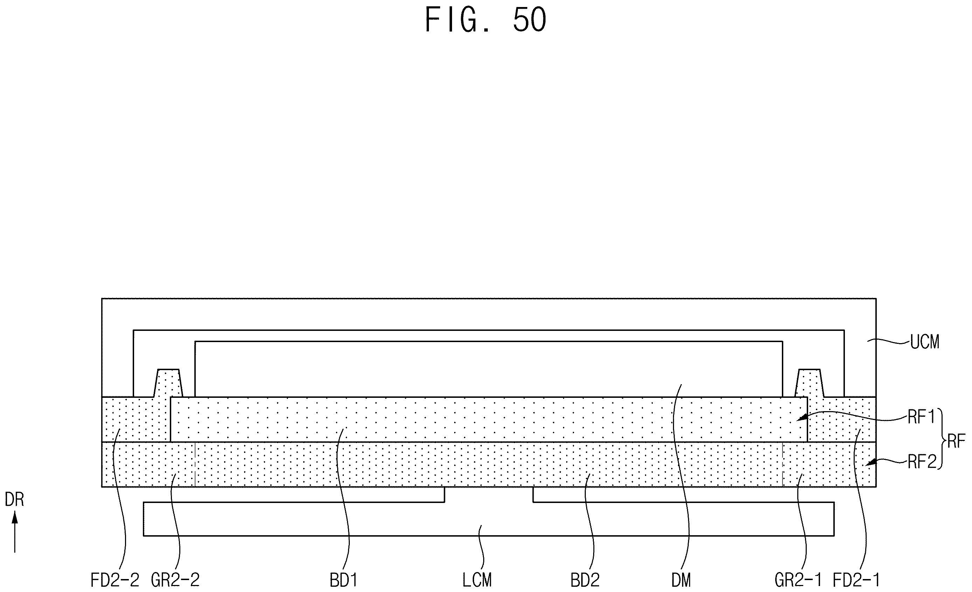

Referring to FIG. 50, the folding portion FD may be folded such that the folding portion FD overlaps with the second grip portion GR2 and the first sub-release film RF1. For example, a folding line may be formed between the second grip portion GR2 and the folding portion FD, and the folding portion FD may be folded with respect to the folding line. Accordingly, the folding portion FD may be disposed on the second grip portion GR2 and the first sub-release film RF1 and may overlap with the second grip portion GR2 and the first sub-release film RF1. In some aspects, the upper cover member UCM may be attached to the back surface of the folding portion FD because the bottom surface of the folding portion FD faces upward after the folding portion FD is folded.

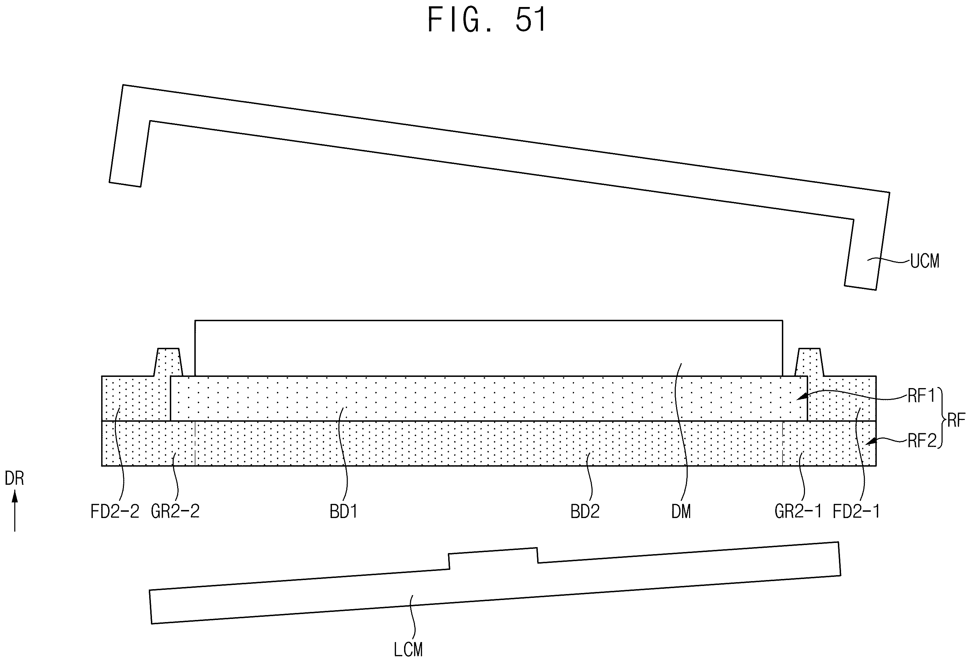

Referring to FIG. 51, the upper cover member UCM and the lower cover member LCM may be sequentially detached. In this case, as the bottom surface of the folding portion FD is release-treated, the upper cover member UCM may be smoothly detached. In some aspects, as the bottom surface of the second body portion BD2 is release-treated, the lower cover member LCM may be smoothly detached.

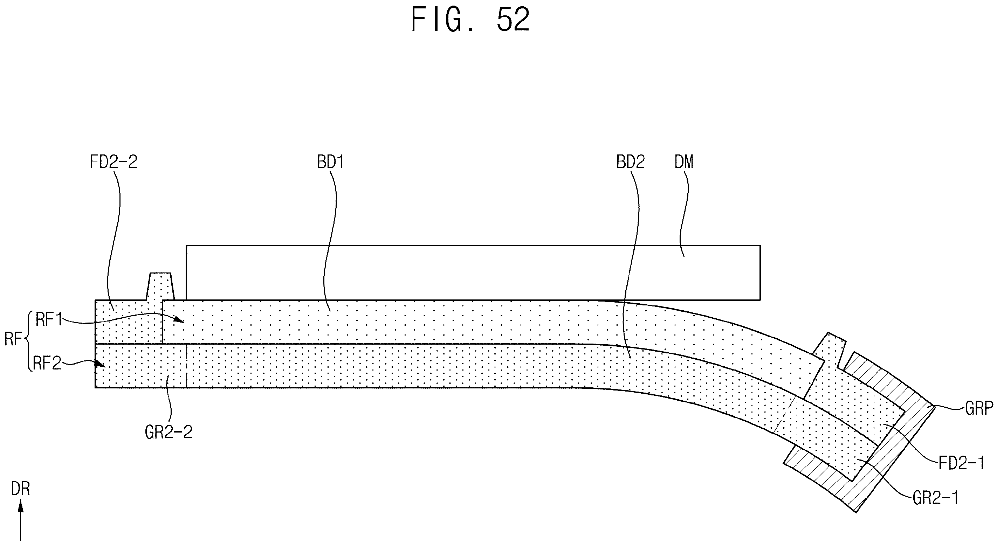

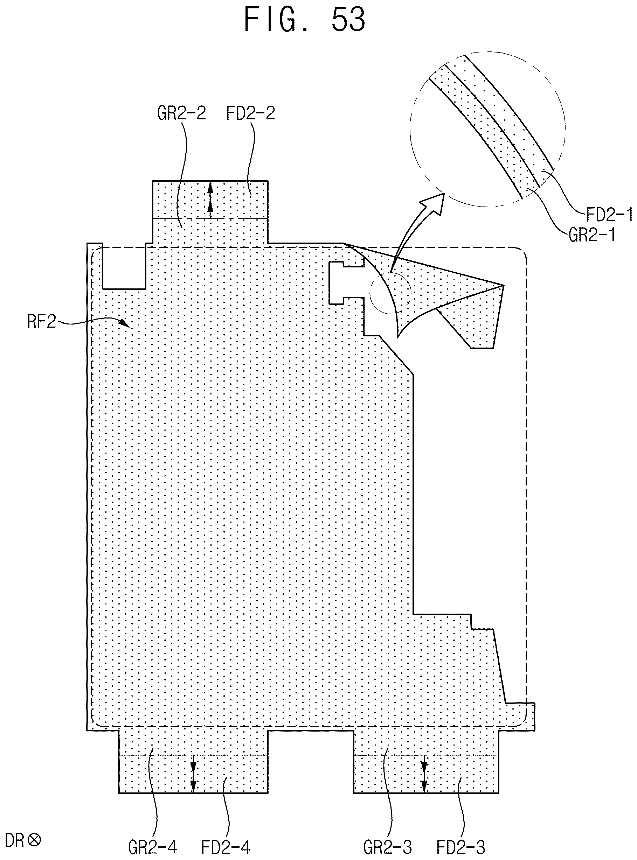

Referring to FIGS. 52 and 53, the release film RF may be detached from the display module DM.

The folding portion FD and the second grip portion GR2 may overlap with each other and may not overlap with the display module DM. Accordingly, as illustrated in FIGS. 52 and 53, the first folding portion FD2-1 and the second-first grip portion GR2-1 may be easily gripped together by a gripper GRP (e.g., a worker's hand).

While the first sub-release film RF1 is detached from the display module DM, the first folding portion FD2-1 and the second-first grip portion GR2-1 may be gripped together by the gripper GRP. Accordingly, while the first sub-release film RF1 is detached from the display module DM, the second sub-release film RF2 may remain attached to the first sub-release film RF1 and be detached together with the first sub-release film RF1.

Although the present disclosure has been described with reference to embodiments thereof, it will be understood by those skilled in the art that various modifications and changes may be made to the present disclosure without departing from the scope of the present disclosure as set forth in the claims below.

The present disclosure may be applied to a display device and an electronic device including the display device. For example, the present disclosure may be applied to a smartphone, a cellular phone, a smart pad, a smart watch, a tablet PC, a vehicle navigation system, a television, a computer monitor, a laptop, and the like.

Although the present disclosure has been described herein with reference to embodiments thereof, it will be understood by those skilled in the art that various modifications and changes may be made to the present disclosure without departing from the scope of the present disclosure as set forth in the following claims.

## Claims

1. A release film (RF) comprising:
a first sub-release film (RF1) comprising a first body portion (BD1) configured to be attached to a display module (DM) and at least one first grip portion (GR1) that protrudes from the first body portion (BD1); and
a second sub-release film (RF2) disposed under the first sub-release film (RF1) and comprising a second body portion (BD2) attached to the first body portion (BD1) and at least one second grip portion (GR2) that protrudes from the second body portion (BD2),
wherein the first grip portion (GR1) overlaps with the second grip portion (GR2).

2. The release film (RF) of claim 1, wherein the first grip portion (GR1) is attached to the second grip portion (GR2).

3. The release film (RF) of claim 1 or claim 2, wherein the first sub-release film (RF1) is configured to be detachable from the display module (DM) using the first grip portion (GR1).

4. The release film (RF) of claim 3, wherein the second sub-release film (RF2) is configured to remain attached to the first sub-release film (RF1) while the first sub-release film (RF1) is detached from the display module (DM).

5. The release film (RF) of any one of claims 1 to 4, wherein:
the first grip portion (GR1) is configured such that it does not overlap with the display module (DM), and
the second grip portion (GR2) is configured such that it does not overlap with the display module (DM).

6. The release film (RF) of any one of claims 1 to 5, wherein:
the first grip portion (GR1) comprises a first-first grip portion (GR1-1), a first-second grip portion (GR1-2), a first-third grip portion (GR1-3), and a first-fourth grip portion (GR1-4),
the second grip portion (GR2) comprises a second-first grip portion (GR2-1), a second-second grip portion (GR2-2), a second-third grip portion (GR2-3), and a second-fourth grip portion (GR2-4), and
the first-first grip portion (GR1-1), the first-second grip portion (GR1-2), the first-third grip portion (GR1-3), and the first-fourth grip portion (GR1-4) overlap with the second-first grip portion (GR2-1), the second-second grip portion (GR2-2), the second-third grip portion (GR2-3), and the second-fourth grip portion (GR2-4), respectively.

7. The release film (RF) of any one of claims 1 to 6, wherein:
(i) an adhesive force between the first sub-release film (RF1) and the second sub-release film (RF2) is configured to be greater than an adhesive force between the first sub-release film (RF1) and the display module (DM); and/or
(ii) an adhesive force between the first sub-release film (RF1) and the second sub-release film (RF2) is greater than 200 gf/in, and
an adhesive force between the first sub-release film (RF1) and the display module (DM) is configured to be less than 200 gf/in.

8. The release film (RF) of any one of claims 1 to 7, wherein the first grip portion (GP1) is configured to be attached to an upper cover member (UCM).

9. The release film (RF) of any one of claims 1 to 8, further comprising:
a third sub-release film (RF3) disposed under the second sub-release film (RF2) and comprising a third body portion (BD3) attached to the second body portion (BD2), at least one third grip portion (GR3) that protrudes from the third body portion (BD3), and a cut portion (CT) configured to be attached to a lower cover member (LCM), optionally wherein the third grip portion (GP3) overlaps with the first grip portion (GP1) and the second grip portion (GP2).

10. The release film (RF) of any one of claims 1 to 5, wherein the first sub-release film (RF1) further comprises a masking tape (MT) disposed on the first grip portion (GP1) and having a release-treated surface, optionally wherein the masking tape (MT) is configured to be attached to an upper cover member (UCM).

11. The release film (RF) of any one of claims 1 to 8, wherein:
(i) the second sub-release film (RF2) is configured to be attached to a lower cover member (LCM), and
an adhesive force between the second sub-release film (RF2) and the lower cover member (LCM) is configured to be smaller than an adhesive force between the first sub-release film (RF1) and the second sub-release film (RF2); or
(ii) the second sub-release film (RF2) is configured to be attached to a lower cover member (LCM), and
a bottom surface of the second sub-release film (RF2) is release-treated.

12. A release film (RF) comprising:
a first sub-release film (RF1) comprising a first body portion (BD1) configured to be attached to a display module (DM); and
a second sub-release film (RF2) disposed under the first sub-release film (RF1) and comprising a second body portion (BD2) attached to the first body portion (BD1), at least one grip portion (GR2) that protrudes from the second body portion (BD2), and a folding portion (FD) that extends from the grip portion (GR2),
wherein the folding portion (FD) is configured to be folded such that the folding portion (FD) overlaps with the grip portion (GR2).

13. The release film (RF) of claim 12, wherein:
(i) a bottom surface of the folding portion (FD) configured to be attached to an upper cover member (UCM) is release-treated, and
a bottom surface of the second body portion (BD2) configured to be attached to a lower cover member (LCM) is release-treated together with the bottom surface of the folding portion (FD); and/or
(ii) the folding portion (FD) is configured to be folded such that the folding portion (FD) further overlaps the first sub-release film (RF1).

14. A method of manufacturing an electronic device (10), the method comprising:
providing a first sub-release film (RF1) attached to a display module (DM) and a second sub-release film (RF2) attached to the first sub-release film (RF1);
detaching an upper cover member (UCM) attached to a first grip portion (GP1) of the first sub-release film (RF1) from the first sub-release film (RF1); and
detaching the first sub-release film (RF1) from the display module (DM) while gripping the first grip portion (GP1) and a second grip portion (GP2) of the second sub-release film (RF2) together,
wherein the first grip portion (GP1) overlaps with the second grip portion (GP2), the first grip portion (GP1) does not overlap with the display module (DM), and the second grip portion (GP2) does not overlap with the display module (DM).

15. The method of claim 14, wherein:
the second sub-release film (RF2) is detached from the display module (DM) together with the first sub-release film (RF1) while the first sub-release film (RF1) is detached from the display module (DM), and
the second sub-release film (RF2) remains attached to the first sub-release film (RF1) while the first sub-release film (RF1) is detached from the display module (DM).
